# EUROPÄISCHE PATENTSCHRIFT

(11) **EP 1 529 176 B1**
(45) Veröffentlichungstag und Bekanntmachung des Hinweises auf die Patenterteilung: **25.01.2006**
(21) Anmeldenummer: 03793611.9
(22) Anmeldetag: 26.05.2003
(51) Int. Cl.: F16K 1/44

(54) **VORRICHTUNG ZUM ANTRIEB FÜR DOPPELSITZVENTILE**
DRIVE DEVICE FOR DOUBLE-SEAT VALVES
SYSTEME DE COMMANDE POUR SOUPAPES A DOUBLE SIEGE

(30) Priorität: 14.08.2002 DE 10237236
(43) Veröffentlichungstag der Anmeldung: 11.05.2005
(73) Patentinhaber: TUCHENHAGEN GmbH, 21514 Büchen (DE)
(72) Erfinder: BURMESTER, Jens, 23883 Grambek (DE)
(74) Vertreter: Graalfs, Edo
(86) Internationale Anmeldenummer: PCT/EP2003/005508
(87) Internationale Veröffentlichungsnummer: WO 2004/023009

(56) Entgegenhaltungen:
- EP-A- 0 868 619
- WO-A-01/71228
- DE-A- 3 108 973
- DE-A- 3 133 273
- DE-C- 19 900 239

## Beschreibung

### TECHNISCHES GEBIET

Die Erfindung betrifft eine Vorrichtung zum Antrieb für Doppelsitzventile, insbesondere für die Nahrungsmittel- und Getränkeindustrie, nach dem Oberbegriff des Anspruchs 1.

### STAND DER TECHNIK

Eine Vorrichtung der gattungsgemäßen Art ist aus der **DE 31 33 273 C2** bekannt. Bei dieser Vorrichtung sind die Einzelverstelleinrichtungen unterhalb der ausschließlich den Vollhub für die volle Offenstellung erzeugenden Hauptverstelleinrichtung als eigenständige Verstelleinrichtung ohne Änderung der angrenzenden Standardbauteile additiv zwischen Hauptverstelleinrichtung und einem Latemengehäuse eingefügt Die mit diesem sog. "modularen" Antriebskonzept erzielbaren Vorteile bestehen insbesondere darin, dass ein weitestgehend standardisiertes Doppelsitzventil, das über einen Standardantrieb für die Erzeugung der vollen Offenstellung verfügt, durch additives Einfügen von relativ einfachen Einzeiverstelleinrichtungen Sonderfunktionen erhält, wie die Erzeugung von Teiloffenstellungen der beiden Schließglieder. Dabei zeigt die Druckschrift explizit, dass die Hubbegrenzung für die beiden Teiloffenstellungen durch feste Anschläge erreicht wird. In diesem Zusammenhang wird weiter vorgeschlagen; die Hubbegrenzung durch einen Zwischenring vorzunehmen, der zwischen dem die Hubbewegung bewirkenden Kolben und dem diesem jeweils zugeordneten festen Anschlag angeordnet ist. Darüber hinaus wird vorgeschlagen, ohne dass hierzu eine konkrete Lösung dargestellt und beschrieben wird, die notwendige Hubbegrenzung durch von außerhalb der Verstelleinrichtung für die Teiloffenstellungen in Grenzen axial bewegliche Anschläge vorzusehen.

Bei dem vorstehend kurz umrissenen Doppelsitzventil mit festen Anschlägen für die Teiloffenstellungen hat es sich als nachteilig herausgestellt, dass die Anschläge nicht in Grenzen axial veränderlich sind. Dadurch kann in der Praxis die Situation eintreten, dass bei der erstmaligen Inbetriebnahme des Doppelsitzventils die beiden Teiloffenstellungen entweder zu klein oder zu groß ausfallen. Dieses Ergebnis ist davon abhängig, welche Gesamttoleranz sich aus der Summe der Einzeltoleranzen der für die Realisierung der Teiloffenstellungen beteiligten Bauteile des Doppelsitzventils ergibt. Eine nicht hinreichende Teiloffenstellung führt zu einer unzureichenden oder gar nicht erfolgenden Sitzreinigung; letztere dann, wenn sich die Teiloffenstellung im Bereich der sich elastisch rückverformenden Sitzdichtung des betreffenden Schließgliedes bewegt. Eine zu große Teiloffenstellung führt regelmäßig zu einem unnötig hohen Reinigungsmittelverbrauch und es besteht unter diesen Umständen speziell am unabhängig angetriebenen Schließglied die Gefahr, dass der nach Vollzug der Teiloffenstellung zwischen den beiden Schließgliedern verbleibende Durchtrittsringspalt zu klein bemessen ist, um den durch die Sitzreinigung über die freigelegte Sitzfläche des unabhängig angetriebenen Schließgliedes aus dem zugeordneten Ventilgehäuseteil herangeführten Reinigungsmittelstrom möglichst drucklos abzuführen, wie dies aus Sicherheitsgründen zu fordern ist. Im schlimmsten Fall kommt der Durchtrittsringspalt gar nicht zustande und die beiden Schließglieder kollidieren miteinander.

Aus der Erkenntnis, dass die einzelnen Bauteile aus Kostengründen nicht so eng toleriert werden können, dass die zwangsläufig sich ergebende Gesamttoleranz ohne nachteiligen Einfluss auf die gewünschte Teiloffenstellung bleibt, ergab sich bei dem vorg. bekannten Doppelsitzventil bislang in der Regel die Notwendigkeit, die festen Anschläge an die sich jeweils ergebende istsituation anzupassen. Dies erfolgte vorzugsweise dadurch, dass die Zwischenringe zwischen Kolben und festem Anschlag mit der jeweils genau erforderlichen axialen Abmessung hergestellt und eingebaut wurden. Eine derartige Justierung des Antriebs des Doppelsitzventils ist aufwändig und damit kostenträchtig, da das Doppelsitzventil zunächst komplett montiert werden muss, um die Istsituation festzustellen, anschließend teilweise demontiert werden muss, um die passenden Zwischenringe einzusetzen und schließlich erneut zu montieren ist. Veränderungen der Teiloffenstellungen durch unterschiedliche Betriebsbedingungen und/oder Verschleiss der Bauteile können, über die Lebensdauer des Doppelsitzventils gesehen, nur durch die sich in Zeitabständen wiederholende vorstehende Prozedur kompensiert werden.

Aus dem letztgenannten Nachteil erwächst die Notwendigkeit, bei einem Doppelsitzventil der in Rede stehenden Art wenigstens die kritische Teiloffenstellung, nämlich jene des unabhängig angetriebenen Schließgliedes, möglichst einfach, vorzugsweise von außen, einstellbar zu machen. Hierzu beschreibt die **DE 31 33 273 C2** keine konkreten Lösungen; es finden sich dort allenfalls aufgabenhafte Vorschläge.

In der **DE 31 08 973 C2** ist eine Steuereinrichtung für Doppelsitzventile beschrieben, bei der die Anschlagposition der Kolben zur Erzeugung der Teiloffenstellungen relativ zur Verstellstange auf dieser veränderbar ist. Die Veränderung kann dabei von außerhalb der Einzelverstelleinrichtungen über Verstellorgane vorgenommen werden. Die Möglichkeit der Einstellbarkeit wird allerdings dadurch erkauft, dass beide Verstellstangen durch die Hauptverstelleinrichtung nach oben herausgeführt sind und in einem beiden Schließgliedern gemeinsamen Steuerzylinder enden. Nachteilig bei dieser Anordnung ist, dass die beiden Verstellstangen relativ lang und damit festigkeitsmäßig kritisch ausgeführt werden müssen, da sie, ausgehend von den Schließgliedern im Ventilgehäuse, das Laternengehäuse, die Hauptverstelleinrichtung und die Einzelverstelleinrichtungen durchdringen bzw. überbrücken müssen. Die notwendige Zugänglichkeit des Verstellorgans der der Hauptverstelleinrichtung benachbarten Einzelverstelleinrichtung erfordert dort ein zusätzliches Latemengehäuse, das die Bauhöhe der Gesamtanordnung erhöht. Weiterhin von Nachteil ist, dass die Anordnung eines Steuerkopfes am Ende der Steuereinrichtung, der in der höchsten Ausbaustufe unter anderem den Bewegungsablauf und die diskreten Endstellungen der Schließglieder überwacht und die gesamte Steuerungslogik sowie die Pilotventile für die Ansteuerung der Verstelleinrichtungen mit Druckmittel aufnimmt, nicht möglich ist, ohne die Zugänglichkeit des dort angeordneten Verstellorgans zu beseitigen.

Aus der **EP 0 868 619 B1** ist eine Vorrichtung zum Antrieb für Doppelsitzventile der in Rede stehenden Art bekannt, die neben einer Hauptverstelleinrichtung zwei Einzelverstelleinrichtungen zur Erzeugung der beiden Teiloffenstellungen aufweist. Alle Verstelleinrichtungen sind in einem gemeinsamen Antriebsgehäuse untergebracht, wobei die beiden Einzelverstelleinrichtungen zwischen der Hauptverstelleinrichtung und einem sich an das Ventilgehäuse anschließenden Laternengehäuse angeordnet sind. Diese Anordnung hat den Vorteil, ebenso wie jene gemäß DE 31 33 273 C2, dass die Verstellstange des abhängig angetriebenen Schließgliedes bereits in der zugeordneten Einzelverstelleinrichtung enden kann und dass lediglich bei Bedarf die Verstellstange des unabhängig angetriebenen Schließgliedes durch die Hauptverstelleinrichtung hindurch bis in den Steuerkopf geführt wird.

Darüber hinaus ist die zur Teilhubbegrenzung der Schließglieder jeweils vorgesehene Anschlagposition der Kolben relativ zur jeweiligen Verstellstange auf dieser von der Außenseite der Antriebsvorrichtung im Bereich des Latemengehäuses veränderbar. Als Verstellorgane sind in axialer Richtung einander durchdringende Anschlaghülsen vorgesehen, durch die die konzentrisch zueinander angeordneten Verstellstangen hindurchgeführt sind, wobei die äußere Anschlaghülse im Antriebsgehäuse und die innere Anschlaghülse in der äußeren jeweils verstell- und festlegbar angeordnet sind.

Der vorstehend kurz beschriebene Antrieb wird in Fachkreisen auch als sog. "integrierter" Antrieb bezeichnet, da er in einem gemeinsamen Gehäuse sowohl die Hauptverstelleinrichtung für den vollen Öffnungshub H als auch die Einzelverstelleinrichtungen für die Teiloffenstellungen T1 und T2 beherbergt. Derartige Antriebe bauen in der Regel kompakt und sie erlauben es, wenn die Einzelverstelleinrichtungen in der vorstehend beschriebenen Weise in Bezug auf die Hauptverstelleinrichtung angeordnet sind, einen sog. Rückmelde- und/oder Steuerkopf unmittelbar oberhalb der Hauptverstelleinrichtung anzuordnen. Ein weiterer Vorteil ergibt sich aus der Einstellbarkeit der Teiloffenstellungen von außen, wenngleich die diesbezüglich vorgeschlagene Lösung sehr aufwändig ist.

Aus der Tatsache, dass integrierte Antriebe für die maximal möglichen Anforderungen, die an Doppelsitzventile der in Rede stehenden Art gestellt werden, ausgelegt sind, erwächst auch ihr wesentlicher Nachteil. Maximale Anforderungen sind dann gegeben, wenn neben dem vollen Öffnungshub H, der durch die Hauptverstelleinrichtung realisiert wird, Teiloffenstellungen T1, T2 der beiden Schließglieder zur Durchführung der jeweiligen Sitzreinigung erforderlich sind, die durch den Schließgliedern zugeordnete Einzelverstelleinrichtungen ausgeführt werden. Da ein Großteil der in Anlagen der Nahrungsmittel- und Getränkeindustrie eingesetzten Doppelsitzventile ohne die Möglichkeit oder die Notwendigkeit der Sitzreinigung zur Anwendung kommen, da lediglich Vermischungssicherheit gefordert wird, sind integrierte Antriebe, bei denen nur die Hauptverstelleinrichtung aktiviert ist, in der Regel zu aufwändig und damit unwirtschaftlich. Für derartige Anwendungsfälle wird dann in der Praxis auf "normale" Antriebe (Standardantriebe) für Doppelsitzventile zurückgegriffen, die lediglich eine Hauptverstelleinrichtung für die volle Offenstellung H beherbergen. Dadurch reduzieren sich dann die jeweiligen Stückzahlen für integrierte Antriebe eines Herstellers von Doppelsitzventilen, da jedes Doppelsitzventil entsprechend den gestellten Anforderungen nur mit einem geeigneten Antrieb ausgerüstet ist, und es ergeben sich dadurch für integrierte Antriebe ggf. unwirtschaftliche Fertigungsstückzahlen.

Das abhängig angetriebene Schließglied des Doppelsitzventils, das mit seinen beiden Dichtungen auch als Doppelteller bezeichnet wird, ist zwar bei der Sitzreinigung hinsichtlich seiner Teiloffenstellung T2 unkritisch und kann daher zum Vollzug der zugeordneten Sitzreinigungsstellung gegen einen festen Anschlag gefahren werden. Dieser Anschlag bedarf daher keiner aufwändigen Voreinstellung oder Nachjustierung. In der Regel steht bei der Sitzreinigung Reinigungsmittel unter Druck am abhängig angetriebenen Schließglied an, so dass dieses gegen die aus dem jeweiligen Druck und der zugeordneten wirksamen Fläche dieses Schließgliedes resultierende Schließkraft um den Teilhub T2 geöffnet werden muss. Zur Überwindung dieser Schließkraft bzw. Niederhaltekraft ist die zugeordnete zweite Einzelverstelleinrichtung entsprechend zu dimensionieren. Entweder ist eine hinreichend große Kolbenfläche des Antriebskolbens in dieser zweiten Einzelverstelleinrichtung vorzusehen oder aber es ist, falls hinsichtlich der Abmessung des Durchmessers des Antriebskolbens. Restriktionen bestehen, der Druck des den Antriebskolben beaufschlagenden Druckmittels entsprechend anzuheben. Eine Anpassung des Antriebs an bestehende Druckverhältnisse über eine entsprechende Dimensionierung des Antriebskolbens ist immer in erster Linie eine Kostenfrage und wird in der Regel nur gewählt, wenn andere Möglichkeiten nicht zur Verfügung stehen. Die Wahl eines höheren Druckes des Druckmittels wird in der Regel präferiert; sie scheidet in der Praxis jedoch immer dann aus, wenn in der Anlage bzw. dem Betrieb, in dem das sitzreinigungsfähige Doppelsitzventil installiert ist, ein diesbezügliches Druckniveau nicht vorhanden oder aus Kostengründen zusätzlich nicht geschaffen werden kann.

Aufgabe der vorliegenden Erfindung ist es, eine Vorrichtung der gattungsgemäßen Art derart zu gestalten, dass sie möglichst einfach aufgebaut und dass die Teiloffenstellung des unabhängig angetriebenen Schließgliedes von außerhalb der Vorrichtung einstellbar ist.

Darüber hinaus soll im Rahmen einer vorteilhaften Ausgestaltung der vorgeschlagenen Vorrichtung eine größere Flexibilität in der Anpassung der zweiten Einzelverstelleinrichtung für die Teilhubbewegung des abhängig angetriebenen Schließgliedes an vorhandene Drücke des Druckmittels sichergestellt werden.

### ZUSAMMENFASSUNG DER ERFINDUNG

Die Aufgabe wird durch die Merkmale des Anspruchs 1 gelöst. Vorteilhafte Ausführungsformen der vorgeschlagenen Vorrichtung sind Gegenstand der Unteransprüche.

Ein wesentlicher Vorteil der vorgeschlagenen Lösung besteht darin, dass erstmals eine Lösung offenbart wird, wie bei einem modularen Antriebskonzept, bei dem die Hauptverstelleinrichtung aus einem Standardantrieb besteht und die Einzelverstelleinrichtungen eigenständig ausgebildet und zwischen Standardantrieb und dem Ventilgehäuse bzw. einem mit diesem verbundenen Laternengehäuse eingefügt sind, die (kritische) Teiloffenstellung des unabhängig angetriebenen Schließgliedes von außerhalb der Vorrichtung einstellbar ist.

Damit ist es nunmehr möglich, sitzreinigungsfähige und nicht sitzreinigungsfähige Doppelsitzventile mit dem gleichen Standardantrieb für die volle Öffnungsbewegung des Ventils auszustatten. Dadurch sind einerseits die besten Voraussetzungen für eine wirtschaftliche Fertigungsstückzahl derartiger Standardantriebe gegeben und andererseits werden bei jedem Doppelsitzventil nur die jeweils erforderlichen Antriebsteile eingesetzt. Darüber hinaus kann die kritische Teiloffenstellung des unabhängig angetriebenen Schließgliedes von Fall zu Fall in Abhängigkeit von der sich ergebenden Gesamttoleranz der beteiligten Bauteile von außerhalb der Vorrichtung justiert werden. Die weniger kritische Teiloffenstellung des abhängig angetriebenen Schließgliedes ist durch einen festen Anschlag beherrschbar, da die an dem Zustandekommen dieser Teiloffenstellung beteiligten Bauteile so toleriert werden können, dass die hinzunehmende Gesamttoleranz einen untergeordneten Einfluss auf die erforderliche Teiloffenstellung hat.

Darüber hinaus ermöglicht es der Vorschlag, die Sonderfunktionen, nämlich die Realisierung der Teithubbewegung T1, T2 der beiden Schließglieder zum Zwecke ihrer Sitzreinigung mittels eigenständiger Einzelverstelleinrichtungen, wirtschaftlich vertretbar sowohl bei Erstausrüstungen von Doppelsitzventilen als auch bei der Nachrüstung bereits vorhandener, bislang normalschaltender, jedoch sitzreinigungsfähiger Doppelsitzventile zu implementieren.

Das Einfügen der eigenständigen Einzelverstelleinrichtungen in ein relativ komplexes Gebilde, wie es ein Doppelsitzventil darstellt, ist deshalb möglich, weil die einzelnen Bauteile im Rahmen eines Baukaustensystems an ihren Anschluss- und Verbindungsstellen weitestgehend genormt oder standardisiert sind. Dies trifft zu sowohl für die Hauptverstelleinrichtung (Standardantrieb) als auch für das an das Ventilgehäuse angrenzende Laternengehäuse und die aus dem oberen Ventilgehäuseteil herausgeführten Verstellstangen. Die Gehäuseverbindungen erfolgen vorzugsweise über standardisierte sog. Spannringverbindungen und die Verstellstangen werden an den entsprechenden Stellen miteinander verschraubt. Durch die Anordnung der Einzelverstelleinrichtungen zwischen Hauptverstelleinrichtung und Ventilgehäuse bleibt die andere Seite der Hauptverstelleinrichtung frei für die Anordnung einer Steuereinrichtung, die unter anderem den Bewegungsablauf und die diskreten Endstellungen der Schließglieder überwacht und die gesamte Steuerungslogik sowie die Pilotventile aufnimmt.

Im Hinblick auf eine möglichst einfache und von außerhalb der Vorrichtung zugängliche Realisierung der Teilhubbegrenzung des unabhängig angetriebenen ersten Schließgliedes sieht eine vorteilhafte Ausführungsform vor, die Anschlagposition des zweiten Antriebskolbens für die erste Teiloffenstellung T1 mittelbar über eine Mitnehmerhülse zu bestimmen, die einerseits im zweiten Antriebskolben und andererseits auf einem Führungsteil gelagert und abgedichtet ist, das als separates Teil von außen in das dritte Gehäuseteil der Einzelverstelleinrichtungen eingreift und dieses komplementär ergänzt. Die Mitnehmerhülse findet dabei ihre Anlage an der Anschlagmutter, die auf dem Führungsteil, von außerhalb zugänglich, verstell- und festlegbar angeordnet ist. Die Anordnung des Führungsteils erlaubt es, dieses aus dem dritten Gehäuseteil der Einzelverstelleinrichtung so weit nach außen herauszuziehen, bis die Anschlagmutter zugänglich ist. Die Verstellung der Anschlagmutter erfolgt vorzugsweise über eine Verschraubung mit Feingewinde, ihre Festlegung beispielweise über eine Madenschraube. Der Zugang zum Führungsteil wird auf einfache Weise dadurch möglich, dass die Spannringverbindung zwischen Hauptverstelleinrichtung und Einzelverstelleinrichtungen gelöst und sämtliche mit der ersten Antriebsstange der Hauptverstelleinrichtung unmittelbar oder mittelbar verbundenen Bauteile um das erforderliche axiale Abstandsmaß aus dem dritten Gehäuseteil der Einzelverstelleinrichtungen herausgezogen werden.

Die vorstehend erwähnte Ausbaubarkeit der in Frage kommenden Bauteile ergibt sich aus einer weiteren vorteilhaften Ausgestaltung, die vorsieht, dass die Anordnung, bestehend aus einem Führungsteil in Verbindung mit der Anschlagmutter, der Mitnehmerhülse, der zweiten Antriebsstange in Verbindung mit der Kontermutter, einer dritten Antriebsstange und einer zwischen letzterer und der zweiten Antriebsstange angeordneten zweiten Feder, insgesamt aus den montierten Einzelverstelleinrichtungen in Richtung der an letzteren anflanschbaren Hauptverstelleinrichtung ausbaubar ist.

Um ein möglichst verzögerungsfreies Ansprechen der ersten Einzelverstelleinrichtung nach ihrer Ansteuerung mit Druckmittel sicherzustellen, sieht ein weiterer Vorschlag vor, die axiale Erstreckung der Mitnehmerhülse größer als die volle Offenstellung H des Doppelsitzventils auszuführen. Durch diese Maßnahme wird der zweite Antriebskolben so nah wie möglich an den dritten Antriebskolben herangeführt, so dass der Rauminhalt des innerhalb der Einzelverstelleinrichtungen zwischen diesen beiden Antriebskolben gebildeten zweiten Druckmittelraumes, der die erste Teiloffenstellung T1 bewirkt, minimiert ist.

Zur leichteren Anpassung des Antriebes der zweiten Einzelverstelleinrichtung, die zur Realisierung des Teilhubes T2 für das abhängig angetriebene Schließglied vorgesehen ist, an unterschiedliche, vor allem aber relativ niedrige Drücke des Druckmittels sieht eine weitere Ausführungsform der vorgeschlagenen Vorrichtung vor, dass der dritte Antriebskolben auf seiner dem zweiten Antriebskolben zugewandten Seite mit einem durchmesserkleineren Zusatzkolben fest, jedoch lösbar verbunden ist, dass der Zusatzkolben im Zusammenwirken mit einem am Gehäuse der Einzelverstelleinrichtungen festgelegten Gehäusering einen vierten Druckmittelraum bildet, der mit einem zwischen dem dritten Antriebskolben und dem vierten Gehäuseteil gebildeten dritten Druckmittelraum verbunden ist, und dass sich bei Zufuhr eines dritten Druckmittelstromes zum dritten Druckmittelraum auch zusätzlich im vierten Druckmittelraum eine auf den Zusatzkolben wirkende Zusatzkraft ergibt, die sich einer auf den dritten Antriebskolben wirkenden Kraft additiv überlagert. Durch die Anordnung eines Zusatzkolbens am Antriebskolben der zweiten Einzelverstelleinrichtung erhält letztere eine Funktion, die vielfach auch als sog. "Stapelfunktion" bezeichnet wird. Der Antriebskolben erfährt durch den Zusatzkolben quasi eine Flächenvergrößerung, die sich durch die gewählte Anordnung allerdings nicht in einer durchmessergrößeren Kolbenfläche auswirkt, sondern die in einer zweiten, parallelen Ebene stattfindet. Im vorliegenden Falle gelangt das Druckmittel zunächst zum Antriebskolben und anschließend zum Zusatzkolben, um jeweils über die installierte Kolbenfläche eine Kraft am jeweiligen zugeordneten Kolben zu entfalten, wobei diese beiden Kräfte, die Kraft am Antriebskolben und die Zusatzkraft am Zusatzkolben, sich additiv überlagern.

Eine kompakte Anordnung der zweiten Einzelverstelleinrichtung mit Zusatzkolben wird gemäß einem weiteren Vorschlag dadurch erreicht, dass der Zusatzkolben einen durchmessergrößeren äußeren Kolbenabschnitt und einen durchmesserkleineren inneren Kolbenabschnitt aufweist, dass der innere Kolbenabschnitt stirnseitig gegen den dritten Antriebskolben abgedichtet und mit diesem verschraubt ist, dass der äußere Kolbenabschnitt umfangsseits gegen die Mantelfläche einer zylindrischen Ausnehmung im Gehäusering und der innere Kolbenabschnitt umfangsseits in einer koaxialen Durchgangsbohrung im Gehäusering gedichtet sind, und dass im Verbindungsbereich des dritten Antriebskolbens mit dem Zusatzkolbens in ersterem ein erster Druckmittelkanal und in letzterem ein zweiter Druckmittelkanal angeordnet sind, die miteinander korrespondieren und die den dritten Druckmittelraum und den vierten Druckmittelraum druckmitteldurchlässig miteinander verbinden. Der im Gehäuse der Einzelverstelleinrichtungen festgelegte Gehäusering bildet einerseits mit dem Zusatzkolben den notwendigen zusätzlichen vierten Druckmittelraum und schafft andererseits durch seine gehäuseseitige Abstützung die physikalischen Voraussetzungen für die Addition der Zusatzkraft zur Kraft am dritten Antriebskolben. Letzterer begrenzt in Verbindung mit dem vierten Gehäuseteil den dritten Druckmittelraum, in den der dritte Druckmittelstrom zunächst eingeleitet wird, um dann anschließend in den vierten Druckmittelraum zu gelangen.

Gemäß einer weiteren vorteilhaften Ausführungsform weist der Gehäusering umfangsseits einen radialen Vorsprung auf, mit dem der Gehäusering im Verbindungsbereich zwischen dem dritten und dem vierten Gehäuseteil formschlüssig festgelegt ist. Die Montage des Gehäuseringes ist unter diesen festgelegt ist. Die Montage des Gehäuseringes ist unter diesen Bedingungen denkbar einfach, da letzterer in das dritte und das vierte Gehäuseteil eingelegt wird, bevor diese dann miteinander stoffschlüssig verbunden werden.

Die erfindungsgemäße Vorrichtung wird entweder mit oder ohne Zusatzkolben ausgeführt. Da es von Vorteil ist, wenn das Gehäuse der Einzelverstelleinrichtungen mit den in Frage kommenden Druckmittelanschlüssen immer gleich ausgeführt ist, unabhängig davon, ob ein Zusatzkolben vorhanden ist oder nicht, sieht eine weitere Ausführungsform der vorgeschlagenen Vorrichtung vor, dass ein zweiter Druckmittelanschluss für einen zweiten Druckmittelstrom zur Beaufschlagung des im dritten Gehäuseteil angeordneten zweiten Antriebskolbens in einen vorgeschalteten zweiten Druckmittelraum im Bereich zwischen dem dritten Antriebskolben und dem Gehäusering einmündet, und dass der vorgeschaltete zweite Druckmittelraum mit einem zwischen dem zweiten Antriebskolben einerseits und dem Gehäusering in Verbindung mit dem Zusatzkolben andererseits gebildeten zweiten Druckmittelraum über wenigstens einen Verbindungskanal verbunden ist, der in einem die zylindrische Ausnehmung außenseits umfassenden Teil des Gehäuserings angeordnet ist. Durch diese Anordnung kann der zweite Druckmittelanschluss an jener Stelle im Gehäuse der Einzelverstelleinrichtungen verbleiben, an der er angeordnet wird, wenn die zweite Einzelverstelleinrichtung ohne Zusatzkolben ausgerüstet ist. Der Verbindungskanal im Gehäusering stellt dessen Durchlässigkeit für Druckmittel sicher, so dass das über den zweiten Druckmittelanschluss zugeführte Druckmittel von der einen Seite des Gehäuserings auf dessen andere Seite unterhalb des zweiten Antriebskolbens gelangen kann.

Der in seinem Aufbau relativ einfache Gesamtantrieb, der durch seinen modularen Aufbau zusätzlich eine klare funktionale Trennung erfährt, ist auch relativ unproblematisch hinsichtlich einer Addition hinzunehmender Fertigungstoleranzen seiner einzelnen Bauteile, so weit es jene betrifft, die für die zweite Teiloffenstellung T2 des abhängig angetriebenen zweiten Schließgliedes zuständig sind. Dies resultiert aus der Tatsache, dass das zweite Schließglied in seiner Sitzreinigungsstellung jeweils unkritisch in das zugeordnete zweite Ventilgehäuseteil hinein öffnet und daher eine Kollisionsgefahr im Zuge der zweiten Teiloffenstellung T2 nicht besteht. Aus diesem Grunde bedarf die vorgeschlagene Vorrichtung diesbezüglich keines einstellbaren Anschlages zur Begrenzung der Teilhubbewegung des zweiten Schließgliedes im Zuge seiner Sitzreinigung, sondern es ist die denkbar einfachste Endlagenbegrenzung möglich. Diesbezüglich sieht ein Vorschlag vor, dass die Endlagenbegrenzung des dritten Antriebskolbens für die zweite Teiloffenstellung T2 durch einen am Gehäuse fest angeordneten, durch den dritten Antriebskolben axial anfahrbaren Anschlagring oder Gehäusering bestimmt ist.

Um die Vorteile des modularen Antriebskonzeptes voll nutzen, d.h. die Hauptverstelleinrichtung (als Standardantrieb allein) und die Einzelverstelleinrichtungen möglichst flexibel einsetzen zu können, sieht ein weiterer Vorschlag vor, die vom ersten Schließglied bis durch die Hauptverstelleinrichtung hindurchgeführte Verstellstange mehrteilig, nämlich dreiteilig, auszuführen. Hierzu ist vorgesehen, dass die erste Verstellstange über ihr Bolzengewinde mit einer zweiten Antriebsstange im Bereich einer zweiten Einzelverstelleinrichtung verschraubt ist, dass die zweite Antriebsstange über ihr Bolzengewinde wiederum mit einer ersten Antriebsstange der Hauptverstelleinrichtung im Bereich einer ersten Einzelverstelleinrichtung verschraubt ist, und dass die Verschraubung der Antriebsstangen durch eine auf dem Bolzengewinde der zweiten Antriebsstange angeordnete Kontermutter gekontert wird. Diese Anordnung erlaubt es, die erste Verstellstange auch unmittelbar mit der ersten Antriebsstange zu verbinden, wenn das Doppelsitzventil lediglich mit einem Standardantrieb auszustatten ist. Die Konterung verhindert, dass das durch die Verformung einer Hauptfeder in der Hauptverstelleinrichtung auf die erste und die zweite Antriebsstange oder die erste Antriebsstange und die erste Verstellstange übertragene Drehmoment die in Frage kommende Verschraubung zwischen der jeweiligen Paarung löst.

Das Lösen der Verschraubung zwischen der ersten Verstellstange und der zweiten Antriebsstange wird gemäß einem Vorschlag dadurch verhindert, dass im Muttergewinde der zweiten Antriebsstange ein als Gewindesicherung wirkender Gewindeeinsatz (beispielsweise ein sog. Helicoil-Einsatz) vorgesehen ist.

Die durchgehende Druckmittelbohrung in der Längsachse der ersten Antriebsstange wird vorteilhaft als Transportweg für das Druckmittel zum ersten Druckmittelraum genutzt, wobei die Verteilung des Druckmittels in diesen Raum über entsprechende Querbohrungen erfolgt.

Das Gehäuse der Hauptverstell- und jenes der Einzelverstelleinrichtungen können ohne weiteres durchmessergleich ausgeführt werden, da sowohl die volle Offenstellung H als auch die erste Teiloffenstellung T1 gegen dieselbe Vorspannkraft der Hauptfeder in der Hauptverstelleinrichtung gerichtet ist. Dadurch ist es wiederum möglich, wie dies ein weiterer Vorschlag vorsieht, die Gehäuseteile der Hauptverstelleinrichtung und jene der Einzelverstelleinrichtungen aus formgleichen Gehäuserohteilen zu fertigen, wodurch sich eine weitere Kostenreduzierung ergibt.

Die Herstellkosten lassen sich weiter dadurch reduzieren, dass die Gehäuseteile der Hauptverstelleinrichtung und jene der Einzelverstelleinrichtungen jeweils miteinander stoffschlüssig, vorzugsweise durch Schweißen, verbunden sind.

Um sowohl Kosten als auch Gewicht der vorgeschlagenen Vorrichtung zu reduzieren, ist weiterhin vorgesehen, dass die Antriebskolben der Einzelverstelleinrichtungen und jener der Hauptverstelleinrichtung jeweils aus korrosionsbeständigem Leichtmetall, vorzugsweise aus seewasserfestem Aluminium, bestehen.

Bei der Demontage von Baugruppen, die unter Federvorspannung stehen, besteht grundsätzlich ein Sicherheitsrisiko. Um dieses Sicherheitsrisiko zu minimieren, sieht ein weiterer Vorschlag vor, dass nach Lösen der Verschraubung zwischen der ersten Verstellstange und der zweiten Antriebsstange die Vorspannung der zweiten Feder abgebaut ist, die zwischen der zweiten und der dritten Antriebsstange wirksam ist.

### KURZBESCHREIBUNG DER ZEICHNUNGEN

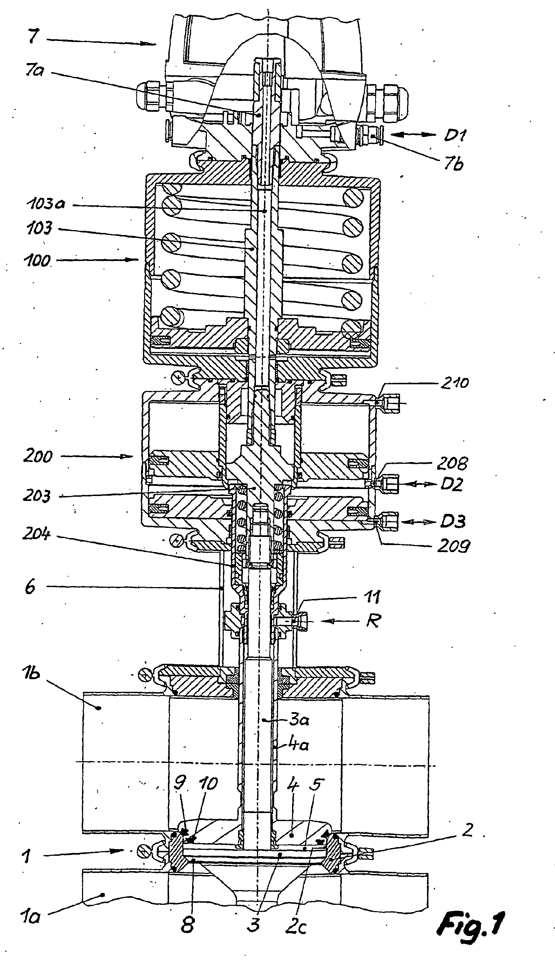

Ausführungsbeispiele der vorgeschlagenen Vorrichtung zum Antrieb für Doppelsitzventile gemäß der Erfindung sind in der Zeichnung dargestellt und werden nachfolgend nach Aufbau und Funktion beschrieben. Es zeigen
- **Figur 1**: einen Mittelschnitt durch eine erste Ausführungsform einer Vorrichtung gemäß der Erfindung zum Antrieb für Doppelsitzventile der gattungsgemäßen Art, wobei ein in seiner Schüeßstetlung befindliches diesbezügliches Doppelsitzventil unterhalb und eine Steuereinrichtung (im Teilschnitt) oberhalb der vorgeschlagenen Vorrichtung angeordnet sind;

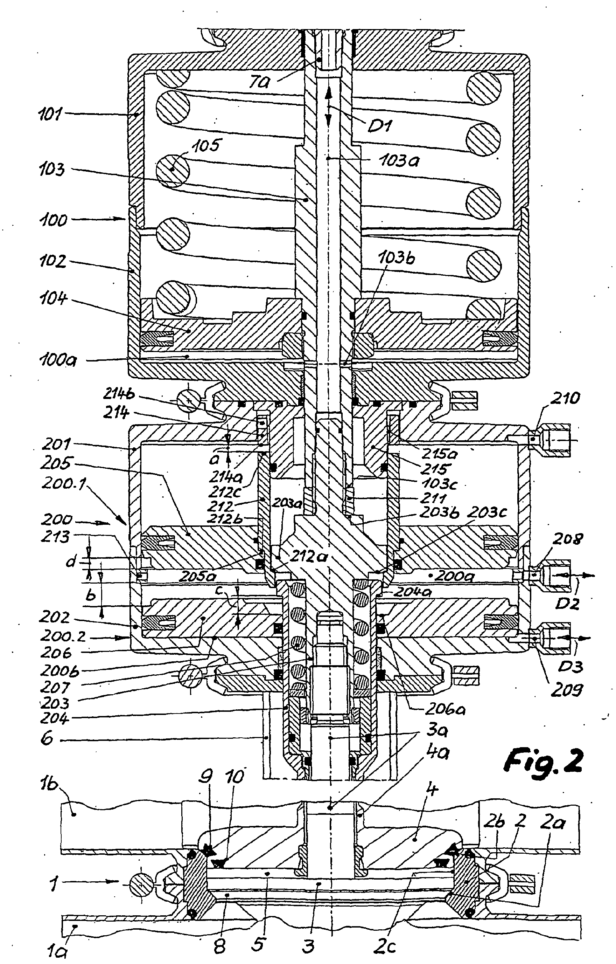

- **Figur 2**: einen Mittelschnitt durch die Vorrichtung gemäß **Figur 1**, wobei die dargestellte Vorrichtung die Lage ihrer bewegungsabhängigen Bauteile so abbildet, dass diese der Schließstellung der im unteren Bereich der Darstellung ausschnittsweise abgebildeten beiden Schließglieder entspricht;

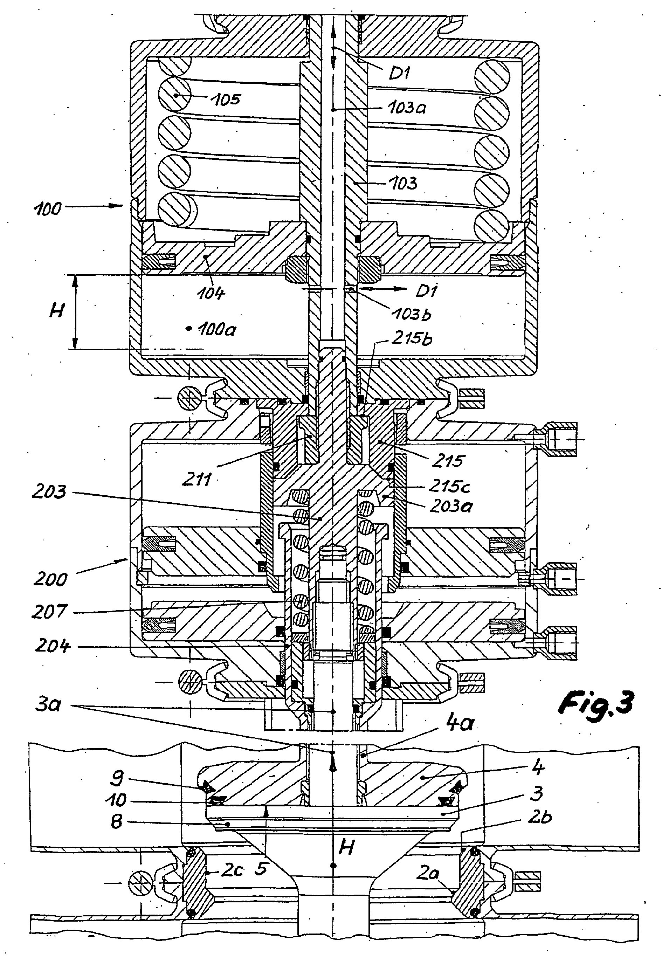

- **Figur 3**: gleichfalls im Mittelschnitt die Vorrichtung und die zugeordneten beiden Schließglieder gemäß **Figur 2**, wobei sich die infrage kommenden Bauteile der Vorrichtung nunmehr in einer der vollen Offenstellung der beiden Schließglieder entsprechenden Lage befinden;

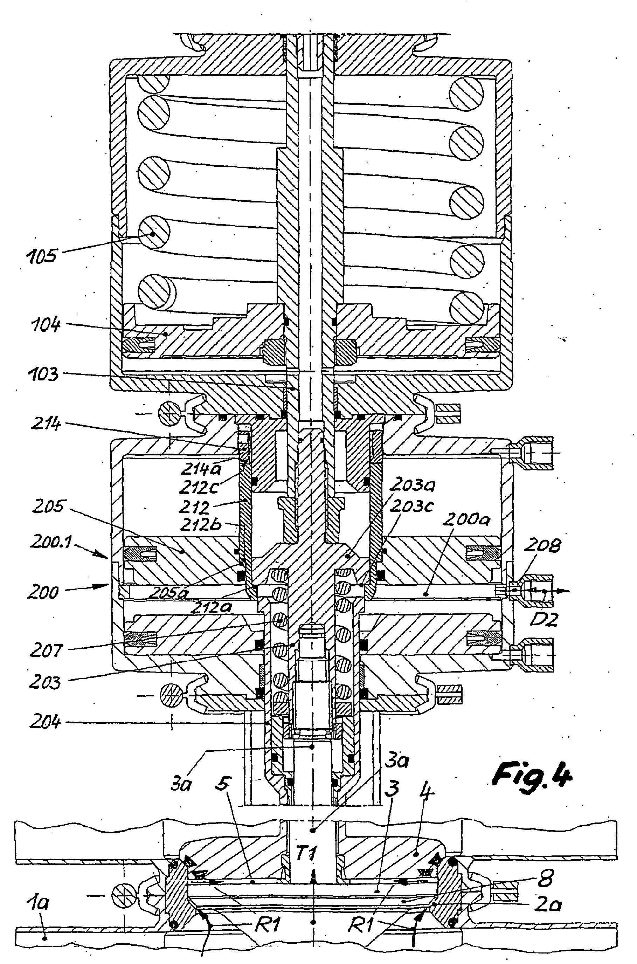

- **Figur 4**: gleichfalls im Mittelschnitt die Vorrichtung und die zugeordneten beiden Schließglieder gemäß **Figur 2**, wobei sich die infrage kommenden Bauteile der Vorrichtung nunmehr in einer der Sitzreinigungsstellung des unabhängig angetriebenen ersten Schließgliedes entsprechenden Lage befinden;

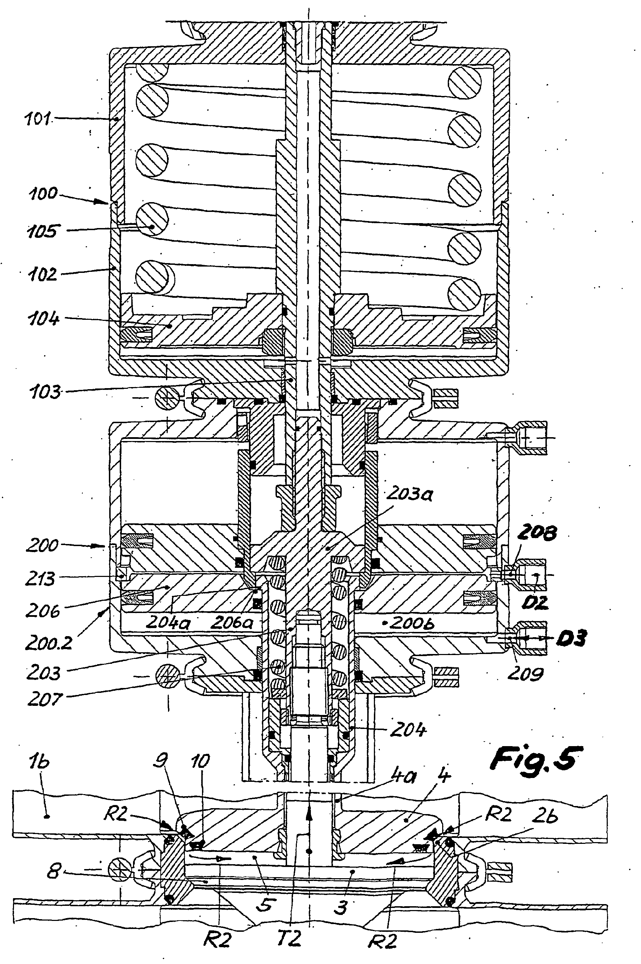

- **Figur 5**: gleichfalls im Mittelschnitt die Vorrichtung und die zugeordneten beiden Schließglieder gemäß **Figur 2**, wobei sich die infrage kommenden Bauteile der Vorrichtung nunmehr in einer der Sitzreinigungsstellung des abhängig angetriebenen zweiten Schließgliedes entsprechenden Lage befinden;

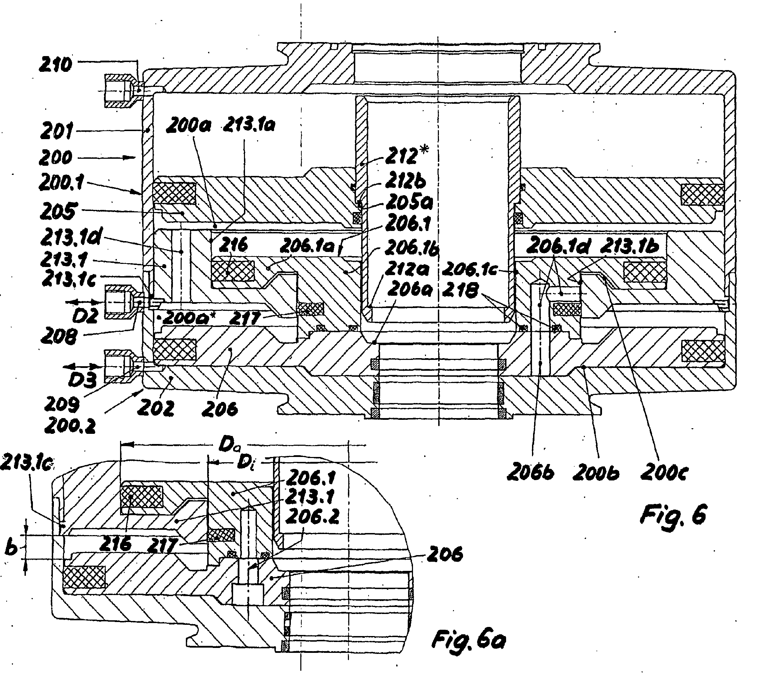

- **Figur 6**: einen Mittelschnitt durch eine zweite Ausführungsform der Einzelverstelleinrichtungen gemäß der Erfindung, wobei der dritte Antriebskol- ben mit einem Zusatzkolben verbunden ist und somit die zugeordnete zweite Einzelverstelleinrichtung eine sog. "Stapelfunktion" erhält und
- **Figur 6a**: einen Ausschnitt aus den Einzelverstelleinrichtungen gemäß **Figur 6** im Bereich der Schraubverbindung zwischen dem dritten Antriebskolben und dem Zusatzkolben.

### DETAILLIERTE BESCHREIBUNG

Die vorgeschlagene Vorrichtung 100, 200 (**Figur 1**) dient dem Antrieb eines Doppelsitzventils, das im wesentlichen aus einem Ventilgehäuse 1 mit einem ersten und einem zweiten Ventilgehäuseteil 1a bzw. 1b, zwei unabhängig voneinander bewegbaren, als Sitzteller ausgebildeten Schließgliedern 3 und 4 mit jeweils zugeordneten Verstellstangen 3a bzw. 4a, einem Sitzring 2, der über seine innenseitige Verbindungsöffnung 2c eine Verbindung zwischen den Ventilgehäuseteilen 1a, 1b herstellt, einem das zweite Ventitgehäuseteit 1b mit der Vorrichtung 100, 200 verbindenden Latemengehäuse 6 sowie einer Steuereinrichtung 7 besteht, wobei letztere auf der dem Doppelsitzventil abgewandten Seite der Vorrichtung 100, 200 angeordnet ist.

Das unabhängig angetriebene erste Schließglied 3 ist mit einer sowohl radial als auch axial wirkenden ersten Sitzdichtung 8 ausgestattet, der eine erste Sitzfläche 2a zugeordnet ist (**Figur 2**), die von einem endseitigen, dem ersten Ventilgehäuseteil 1a benachbarten Teil der die Verbindungsöffnung 2c begrenzenden Fläche im Sitzring 2 gebildet wird. Das abhängig angetriebene zweite Schließglied 4 besitzt in seinem Sitzbereich gleichfalls eine sowohl radial aus auch axial wirkende zweite Sitzdichtung 9, die mit einer am anderen Ende des Sitzrings 2 ausgebildeten zweiten Sitzfläche 2b zusammenwirkt. Zwischen den beiden Schließgliedern 3, 4 wird ein Leckagehohlraum 5 gebildet, der in der vollen Offenstellung H des Dappelsitzventils **(Figur 3)** mittels einer ausschließlich axial wirkenden Dichtung 10, die in der dem Leckagehohlraum 5 zugewandten Stirnfläche des zweiten Schließgliedes 4 angeordnet ist, gegenüber seiner Umgebung abgedichtet ist.

Sowohl in der Schließ- als auch in der Offenstellung des Doppelsitzventils (siehe neben **Figur 1** auch **Figuren 2, 3)** können der Leckagehohlraum 5 sowie die strömungsmäßig beaufschlagbaren angrenzenden Bauteile mittels eines Reinigungsmittels R, das über einen im Bereich des Latemengehäuses 6 an der zweiten Verstellstange 4a angeordneten Reinigungsmittelanschluss 11 vorzugsweise einem nicht näher bezeichneten Ringkanal zwischen der ersten und der zweiten Verstellstange 3a, 4a zugeführt wird, gereinigt werden. Die Abfuhr des derart "extern" zugeführten Reinigungsmittels R aus dem Leckagehohlraum 5 erfolgt dabei über eine nicht näher bezeichnete Verbindungsleitung, die in einer rohrförmigen, durch das erste Ventilgehäuseteil 1a hindurch- und aus diesem herausgeführten Verlängerung am ersten Schließglied 3 angeordnet ist.

Die Abfuhr eines "intern" zugeführten Reinigungsmittels über die jeweilige Sitzreinigungsströmung R1, R2 aus dem Leckagehohlraum 5, das bei der Sitzreinigung des ersten oder des zweiten Schließgliedes 3, 4 aus dem jeweils zugeordneten Ventilgehäuseteil 1a bzw. 1 b herangeführt wird (s. hierzu auch die **Figuren 4** und **5**), erfolgt in gleicher Weise wie bei der externen Reinigungszufuhr R. Bei der Sitzreinigung des ersten Schließgliedes 3 wird dieses so weit in Richtung des zweiten Schließgliedes 4 verschoben **(Figur 4),** dass dadurch eine erste Teiloffenstellung T1 entsteht, in der die erste Sitzdichtung 8 die zugeordnete erste Sitzfläche 2a spaltweit verlassen hat und eine erste Sitzreinigungsströmung R1 aus dem ersten Ventilgehäuseteil 1a über die freigelegte erste Sitzfläche 2a in den Leckagehohlraum 5 generiert wird.

Zur Sitzreinigung des zweiten Schließgliedes 4 wird dieses so weit in Richtung des zweiten Ventilgehäuseteils 1b verschoben (**Figur 5**), dass in einer dadurch vom zweiten Schließglied 4 eingenommenen Teiloffenstellung T2 die zweite Sitzdichtung 9 die zugeordnete zweite Sitzfläche 2b verlassen hat und eine zweite Sitzreinigungsströmung R2 aus dem zweiten Ventilgehäuseteil 1b auf dem Weg über die freigelegte Sitzfläche 2b in den Leckagehohlraum 5 gelangt.

Zur Begrenzung der Reinigungsmittelmenge über die jeweilige Sitzreinigungsströmung R1, R2 im Zuge der Sitzreinigung werden erforderlichenfalls an den Schließgliedern 3, 4 an sich bekannte, zum Leckagehohlraum 5 hin orientierte zylindrische Ansätze (nicht bezeichnet) vorgesehen, wobei beim spaltweiten Entfernen der Schließglieder 3, 4 von ihren zugeordneten Sitzflächen 2a, 2b das zweites Schließglied 4 mit seinem zylindrischen Ansatz noch hinreichend weit mit radialem Spiel in die Verbindungsöffnung 2c hineinreicht und sich das erste Schließglied 3 mit seinem zylindrischen Ansatz stets mit radialem Spiel in der Verbindungsöffnung 2c befindet und beide Schließglieder 3, 4 dort mit ihren zylindrischen Ansätzen jeweils einen sog. Drosselringspalt bilden. Die Begrenzung der Sitzreinungsströmung R1, R2 wird alternativ auch dadurch erreicht, dass die jeweilige Teiloffenstellung T1, T2 nicht stationär, sondern oszillierend generiert wird.

Zur Realisierung der vorstehend kurz dargestellten Schaltbewegungen der Schließglieder 3, 4 (voller Öffnungshub H, Teiloffenstellungen T1 und T2) ist das Doppelsitzventil nunmehr mit der Vorrichtung 100, 200 gemäß der Erfindung ausgestattet, die für das Öffnen und Schließen des Doppelsitzventils im Rahmen des vollen Öffnungshubes H die Hauptverstelleinrichtung 100 (**Figur 1**) und für die Erzeugung der Teiloffenstellungen T1, T2 die Einzelverstelleinrichtungen 200 aufweist. Die Hauptverstelleinrichtung 100 entspricht in ihrem Aufbau einem sog. Standardantrieb, mit dem allein ein Doppelsitzventil der in Rede stehenden Art voll geöffnet und geschlossen werden kann; Sonderfunktionen, wie die Sitzreinigung, lassen sich mit diesem Standardantrieb nicht erfüllen. Die Hauptverstelleinrichtung 100 ist hinsichtlich ihrer peripheren Gehäuseanschlüsse und sonstigen Verbindungsnotwendigkeiten derart ausgestaltet, dass sie bei Weglassen der Einzelverstelleinrichtungen 200 unmittelbar mit einem in der Länge zwar angepassten, sonst jedoch unveränderten Latemengehäuse 6 verbunden werden kann. Die erste Verstellstange 3a ist diesbezüglich endseitig (Bolzengewinde) derart ausgestaltet, dass sie sowohl komplementär zu einem Endabschnitt (Muttergewinde) einer zweiten Antriebsstange 203 der Einzelverstelleinrichtungen 200 als auch komplementär zu einem Endabschnitt (Muttergewinde) einer ersten Antriebsstange 103 der Hauptverstelleinrichtung 100 ist, mit denen sie im Bedarfsfalle jeweils verschraubt wird. Die zweite Verstellstange 4a setzt sich oberhalb des Reinigungsmittelanschlusses 11 in einer als Hohlstange ausgebildeten dritten Antriebsstange 204 fort und endet in den Einzelverstelleinrichtungen 200.

Da die Stellung des ersten Schließgliedes 3 ggf. zu jedem Zeitpunkt erfasst werden muss, ist eine Stellungsmeldestange 7a vorgesehen, die mit der ersten Antriebsstange 103 verschraubt ist und in der Steuereinrichtung 7 endet. Zur Ansteuerung der Hauptverstelleinrichtung 100 ist an der Steuereinrichtung 7 ein erster Druckmittelanschluss 7b vorgesehen, über den ein erster Druckmittelstrom D1 zu- bzw. abgeführt wird. Letzterer gelangt auf dem Weg über eine in der ersten Antriebsstange 103 angeordnete Druckmittelbohrung 103a in die Hauptverstelleinrichtung 100. Zur Erzeugung der Teiloffenstellungen T1, T2 verfügen die Einzelverstelleinrichtungen 200 über einen zweiten und einen dritten Druckmittelanschluss 208, 209 für den zweiten und dritten Druckmittelstrom D2, D3. Ein vierter Druckmittelanschluss 210 wird mittels eines nicht dargestellten Verschlussstopfens verschlossen und bleibt bei der vorgeschlagenen Vorrichtung ohne Funktion.

Das Gehäuse der Hauptverstelleinrichtung 100 (**Figur 2**; die Vielzahl von Dichtungen der Vorrichtung sind hier und in den weiteren Figuren im Einzelnen nicht bezeichnet) besteht aus einem ersten und einem zweiten Gehäuseteil 101, 102, die im Wesentlichen aus formgleichen Gehäuserohteilen gefertigt sind. Auf der ersten Antriebsstange 103 ist ein mit einer Kolbendichtung versehener erster Antriebskoben 104 angeordnet und dort mit einer nicht näher bezeichneten Mutter festgelegt. Eine vorgespannte Hauptfeder 105 findet einerseits ihr Widerlager an dem ersten Antriebskolben 104 und andererseits an dem ersten Gehäuseteil 101. Nach Einbau des ersten Antriebskolbens 104, der ersten Antriebsstange 103 und der Hauptfeder 105 in die beiden Gehäuseteile 101, 102 werden letztere bevorzugt stoffschlüssig, vorzugsweise durch Schweißung, miteinander verbunden. Die Dichtungen und Führungsbuchsen im Gehäuse 101/102 der Hauptverstelleinrichtung 100 sind auch nach dere Endmontage austauschbar. Die konzentrisch zur Längsachse der ersten Antriebsstange 103 in dieser angeordnete Druckmittelbohrung 103a dient dem Transport des ersten Druckmittelstromes D1, der über Querbohrungen 103b in einen zwischen dem ersten Antriebskolben 104 und dem zweiten Gehäuseteil 102 gebildeten ersten Druckmittelraum 100a gelangt, von wo er auch in umgekehrter Richtung abströmt.

Unterhalb der Hauptverstelleinrichtung 100 sind die Einzelverstelleinrichtungen 200 additiv eingefügt. Letztere setzen sich, von oben nach unten gesehen, aus einer ersten Einzelverstelleinrichtung 200.1 zur Erzeugung der ersten Teiloffenstellung T1 des ersten Schließgliedes 3 und aus einer zweiten Einzelverstelleinrichtung 200.2 zur Erzeugung der zweiten Teiloffenstellung T2 des zweiten Schließgliedes 4 zusammen. Das Gehäuse der Einzelverstelleinrichtungen 200 wird aus einem dritten und einem vierten Gehäuseteil 201, 202 gebildet, die im Wesentlichen aus formgleichen Gehäuserohteilen gefertigt sind und nach Montage der Einbauteile bevorzugt stoffschlüssig, vorzugsweise durch Schweißung, miteinander verbunden sind.

In dem dritten Gehäuseteil 201 der ersten Einzelverstelleinrichtung 200.1 ist ein umfangsseits mit einer Kolbendichtung versehener zweiter Antriebskolben 205 angeordnet, und unterhalb des zweiten Antriebskolbens 205 ist in dem vierten Gehäuseteil 202 der zweiten Einzelverstelleinrichtung 200.2 ein umfangsseits mit einer Kolbendichtung versehener dritter Antriebskolben 206 vorgesehen. Letzterer ist innenseits auf der als Hohlstange ausgebildeten dritten Antriebsstange 204 axial verschieblich gelagert und mit dieser in Richtung der zweiten Teiloffenstellung T2 an einem am Ende der Antriebsstange 204 angeformten ersten Rezess 204a in eine Mitnahmeverbindung verbringbar. Der zweite Antriebskolben 205 wird innenseits von einer Mitnehmerhülse 212 durchdrungen, die an ihrem dem dritten Antriebskolben 206 zugewandten Ende innenseits einen zweiten Rezess 212a und außenseits, ein axiales Abstandsmaß von letzterem entfernt, einen dritten Rezess 212b aufweist. Mit dem zweiten Rezess 212a wird die Mitnehmerhülse 212 im Bedarfsfalle in eine Mitnahmeverbindung mit der zweiten Antriebsstange 203 verbracht, die sich in diesem Bereich in ein durchmessergrößeres Kopfteil 203a erweitert. Der dritte Rezess 212b korrespondiert mit einer zweiten Mitnahmefläche 205a am zweiten Antriebskolben 205, so dass letzterer bei einer in Richtung der ersten Teiloffenstellung T1 ausgeführten Verschiebebewegung die Mitnehmerhülse 212 in dieser Richtung mitnimmt.

Die Mitnehmerhülse 212 ist innenseits an ihrem dem zweiten Antriebskolben 205 abgewandten Ende auf einem Führungsteil 215 gelagert und abgedichtet, das von außen in das dritte Gehäuseteil 201 eingreift, dieses komplementär ergänzt und das innenseits von der ersten Antriebsstange 103 konzentrisch durchdrungen wird. Im Durchdringungsbereich mit dem dritten Gehäuseteil 201 ist das Führungsteil 215 außenseits mit einem Gewindeteil 215a versehen, auf das eine Anschlagmutter 214 aufgeschraubt ist. Letztere besitzt an ihrem Umfang wenigstens eine Ausnehmung 214b, mit Hilfe derer eine Verdrehung und damit axiale Verschiebung leicht durchführbar ist. Darüber hinaus wird durch geeignete, nicht im Einzelnen dargestellte Maßnahmen sichergestellt, dass die Anschlagmutter 214 in einer bestimmten Position auf dem Führungsteil 215 unverrückbar festgelegt ist (beispielsweise durch Madenschraube). Eine der Mitnehmerhülse 212 zugewandte Stirnseite der Anschlagmutter 214 ist als vierte Anschlagfläche 214a ausgebildet, die mit einer zugeordneten Stirnfläche der Mitnehmerhülse 212, ausgebildet als dritte Anschlagfläche 212c, korrespondiert. Die vierte Anschlagfläche 214a bildet den von außerhalb der Einzelverstelleinrichtung 200 verstellbaren Anschlag für die Begrenzung der ersten Teiloffenstellung T1 des ersten Schließgliedes 3.

Der Zugang zur Anschlagmutter 214 erfolgt dadurch, dass die Spannringverbindung zwischen der Hauptverstelleinrichtung 100 und den Einzelverstelleinrichtungen 200 gelöst und die Hauptverstelleinrichtung 100 ein Stück axial von den Einzelverstelleinrichtungen 200 entfernt wird. Dabei kommt das Kopfteil 203a am Führungsteil 215 zur Anlage, so dass bei der weiteren Verschiebebewegung die Anschlagmutter 214 das dritte Gehäuseteil 201 nach außen verlässt und somit zum Zwecke ihrer axialen Verstellung von außen zugänglich wird. Diese Prozedur verlangt außer dem Lösen der vorstehenden Spannringverbindung keine weitere Demontage der Vorrichtung, da sämtliche mit der ersten Antriebsstange 103 unmittelbar oder mittelbar verbundenen Bauteile insgesamt aus den montierten Einzelverstelleinrichtungen 200 in Richtung der an letzteren angeflanschten Hauptverstelleinrichtung 100 ausbaubar sind.

Die zweite Antriebsstange 203 ist ihrem der Hauptverstelleinrichtung 100 zugewandten und sich an das erweiterte Kopfteil 203a anschließenden Ende im Bereich der ersten Einzelverstelleinrichtung 200.1 über ein Bolzengewinde mit der ersten Antriebsstange 103 verschraubt, wobei diese Verschraubung durch eine auf dem Bolzengewinde angeordnete Kontermutter 211 gekontert wird. Die Kontermutter 211 kommt dabei einerseits an einer zweiten Anschlagfläche 203b des Kopfteils 203a und andererseits an einer als erste Anschlagfläche 103c ausgebildeten Stirnfläche der ersten Antriebsstange 103 zur Anlage.

Ein zweiter Druckmittelraum 200a, der mit dem zweiten Druckmittelanschluss 208 verbunden ist, wird umfangsseits durch das Gehäuse 201/202 der Einzelverstelleinrichtungen 200, auf der einen Stirnseite durch den zweiten Antriebskolben 205 und auf der anderen Stirnseite durch den dritten Antriebskolben 206 berandet. Zwischen dem dritten Antriebskolben 206 und dem vierten Gehäuseteil 202 wird ein dritter Druckmittetraum 200b gebildet, der mit dem dritten Druckmittelanschluss 209 verbunden ist.

Zwischen dem Kopfteil 203a und der dritten Antriebsstange 204 ist im Bereich der zweiten Einzelverstelleinrichtung 200.2 innerhalb einer Erweiterung der hohlstangenförmig ausgebildeten dritten Antriebsstange 204 eine zweite Feder 207 angeordnet, deren Vorspannung so bemessen ist, dass das zweite Schließglied 4 in seiner Schließlage mit hinreichender Kraft auf die zugeordnete zweite Sitzfläche 2b gedrückt wird. In der Offenstellung des Doppelsitzventils (Figur 3) reicht die aufgrund einer geringfügigen Dehnung der zweiten Feder 207 etwas reduzierte Vorspannung in jedem Fall noch aus, um die Schließglieder 3, 4 mit hinreichender Kraft aneinander zu pressen, damit der Leckagehohlraum 5 über die Dichtung 10 zur Umgebung hin sicher abgedichtet ist.

Die Endlagenbegrenzung des dritten Antriebskolbens 206 für die zweite Teiloffenstellung T2 erfolgt durch einen am Gehäuse 201/202 zwischen den Antriebskolben 205, 206 fest angeordneten, beiderseits axial anfahrbaren Anschlagring 213 (s. hierzu auch Figur 5). Der mögliche Verschiebeweg des dritten Antriebskolbens 206 bis zu seinem Anschlag am Anschlagring 213 ist außenseits durch den zweiten Teilhubweg b bestimmt, während sich der dritte Antriebskolben 206 innenseits um einen dritten Teilhubweg c, der zwangsläufig kleiner als der zweite Teilhubweg b ausgeführt wird, verschieben kann, bis der dritte Antriebskolben 206 mittels seiner dritten Mitnahmefläche 206a in die Mitnahmeverbindung mit dem Rezess 204a gelangt. Demzufolge ergibt sich durch Ansteuerung des dritten Arbeitskolbens 206 eine zweite Teiloffenstellung T2, die durch die Differenz [b- c] bestimmt ist (T2 = b - c).

Die erste Teiloffenstellung T1 ergibt sich zwangsläufig aus dem axialen Abstand zwischen der Mitnehmerhülse 212 und der Anschlagmutter 214, der in Figur 2 als erster Teilhubweg a gekennzeichnet ist, wenn sich das Kopfteil 203a in einer der Schließstellung des ersten Schließgliedes 3 entsprechenden Lage befindet und über eine erste Mitnahmefläche 203c dadurch die Mitnehmerhülse 212 über ihren zweiten Rezess 212a in eine adäquate axiale Lage verschoben hat (erster Teilhubweg a; T1 = a). Der zweite Antriebskolben 205 wird dabei zwangsläufig über den dritten Rezess 212b der Mitnehmerhülse 212 gleichfalls entsprechend verschoben, wobei er in dieser Endlage noch einen axialen Sicherheitsabstand, einen vierten Teilhubweg d, von dem Anschlagring 213 entfernt ist. Im Regelfall wird der zweite Antriebskoben 205 nicht zur Anlage am Anschlagring 213 gelangen, da keine Druckbeaufschlagung aus dem Raum zwischen dem zweiten Antriebskolben 205 und dem dritten Gehäuseteil 201 vorgesehen ist. Kommt jedoch dennoch eine diesbezügliche Verschiebung zustande, dann ist in jedem Falle sichergestellt, dass der zweite Antriebskoben 205 auf der Mitnehmerhülse 212 gelagert und abgedichtet bleibt.

Das Doppelsitzventil wird in seine volle Offenstellung H überführt (Figur 3), wenn der erste Druckmittelstrom D1 der Hauptverstelleinrichtung 100 über die Druckmittelbohrung 103a zugeführt wird, über die Querbohrungen 103b in den ersten Druckmittelraum 100a gelangt und dort den ersten Antriebskolben 104 beaufschlagt. Der derart druckmittelbeaufschlagte Antriebskolben 104 greift mit seiner Öffnungskraft, die sich aus dem Druck im ersten Druckmittelraum 100a und der vorgesehenen wirksamen Kolbenfläche ergibt, unmittelbar an der ersten Antriebsstange 103 an und überwindet somit die Vorspannkraft der Hauptfeder 105 und ggf. entgegen der Öffnungsbewegung an den beiden Schließgliedern 3, 4 angreifende Druck- und/oder Reibungskräfte. Letztere sind zusätzlich zu überwinden, da die erste Antriebsstange 103 zum einen unmittelbar mit der zweiten Antriebsstange 203 und diese wiederum mit der ersten Verstellstange 3a und zum anderen mittelbar mit der dritten Antriebsstange 204 und diese wiederum mit der zweiten Verstellstange 4a verbunden ist. Die volle Offenstellung H findet ihre Endlagenbegrenzung entweder durch Anlage der Kontermutter 211 an einer fünften Anschlagfläche 215b innenseits am Führungsteil 215 oder durch Anlage des Kopfteils 203a an einer sechsten Anschlagfläche 215c außenseits am Führungsteil 215.

Die Sitzreinigung des ersten Schließgliedes 3 (Figur 4) erfolgt durch Einleitung des zweiten Druckmittelstromes D2 in den zweiten Druckmittelraum 200a der ersten Einzelverstelleinrichtungen 200.1 auf dem Weg über den zweiten Druckmittelanschluss 208. Dadurch wird der druckmittelbeaufschlagte zweite Antriebskolben 205 in Öffnungsrichtung des Doppelsitzventils verschoben und befördert dadurch über seine zweite Mitnahmefläche 205a die Mitnehmerhülse 212 über deren dritten Rezess 212b gleichfalls in die gleiche Richtung. Die Mitnehmerhülse 212 kommt über ihre dritte Anschlagfläche 212c an der vierten Anschlagfläche 214a der Anschlagmutter 214 zur Anlage. Gleichzeitig erfasst der zweite Rezess 212a an der Innenseite der Mitnehmerhülse 212 den Kopfteil 203a an der ersten Mitnahmefläche 203c, so dass die zweite Antriebsstange 203 und damit die erste Verstellstange 3a mit dem ersten Schließglied 3 in die Teiloffenstellung T1 = a verschoben wird. Dadurch wird die zugeordnete erste Sitzfläche 2a spaltweit freigelegt und die erste Sitzreinigungsströmung R1 gelangt aus dem ersten Ventilgehäuseteil 1a auf dem Weg über die spaltweit geöffnete erste Sitzfläche 2a in den Leckagehohfraum 5.

Die Sitzreinigung des zweiten Schließgliedes 4 (**Figur 5**) wird dadurch vollzogen, dass dem dritten Druckmittelraum 200b der zweiten Einzelverstelleinrichtung 200.2 der dritte Druckmittelstrom D3 über den dritten Druckmittelanschluss 209 zugeführt wird. Dadurch bewegt sich der druckmittelbeaufschlagte dritte Antriebskolben 206 in Richtung zum Anschlagring 213 hin und hat bis zu seiner dortigen Anlage den zweiten Teilhubweg b zu überwinden (s. **Figur 2**). Zuvor gelangt er nach dem dritten Teilhubweg c über seine dritte Mitnahmefläche 206a in eine Mitnahmeverbindung am Rezess 204a, so dass nach Anschlag an dem Anschlagring 213 von der dritten Antriebsstange 204 in Verbindung mit der zweiten Verstellstange 4a und somit vom zweiten Schließglied 4 die erforderliche Teiloffenstellung T2 = b - c gegen die Vorspannkraft der zweiten Feder 207 vollzogen wurde. Letztere findet ein Widerlager an dem Kopfteil 203a, das über die zweite Antriebsstange 203 in Verbindung mit der ersten Antriebsstange 103 und diese wiederum in Verbindung mit dem ersten Antriebskolben 104 von der Vorspannkraft der Hauptfeder 105 sicher in dieser Endlage fixiert wird. Durch die zweite Teiloffenstellung T2 wird das zweite Schließglied 4 spaltweit von seiner zugeordneten zweiten Sitzfläche 2b entfernt, so dass die zweite Sitzreinigungsströmung R2 aus dem zweiten Ventilgehäuseteil 1 b über den Spalt zwischen der freigelegten zweiten Sitzfläche 2b und der zweiten Sitzdichtung 9 in den Leckagehohlraum 5 gelangt.

In der zweiten Einzelverstelleinrichtung 200.2 innerhalb der Einzelverstelleinrichtungen 200 **(Figur 6),** in der der dritte Antriebskolben 206 mit einer sog. "Stapelfunktion" versehen ist, ist letzterer auf seiner dem zweiten Antriebskolben 205 zugewandten Seite mit einem durchmesserkleineren Zusatzkolben 206.1 fest, jedoch lösbar verbunden. Der Zusatzkolben 206.1 bildet im Zusammenwirken mit einem am Gehäuse 201/202 der Einzelverstelleinrichtung 200 festgelegten Gehäusering 213.1 einen vierten Druckmittelraum 200c, der mit dem zwischen dem dritten Antriebskolben 206 und einem nicht näher bezeichneten Bodenteil des vierten Gehäuseteils 202 gebildeten dritten Druckmittelraum 200b verbunden ist. Dabei weist der Zusatzkolben 206.1 einen durchmessergrößeren äußeren Kolbenabschnitt 206.1a und einen durchmesserkleineren inneren Kolbenabschnitt 206.1b auf, wobei der äußere Kolbenabschnitt 206.1a einen äußeren Durchmesser Dₐ und der innere Kolbenabschnitt 206.1 b einen inneren Durchmesser Dᵢ besitzt **(Figur 6a).** Der innere Kolbenabschnitt 206.1b ist stirnseitig mittels koaxial zueinander angeordneter Dichtungen 218 gegen den dritten Antriebskolben 206 abgedichtet und mit diesem über eine Anzahl über dessen Umfang verteilt angeordnete Schraubenverbindungen 206.2 verschraubt. Der äußere Kolbenabschnitt 206.1a ist umfangsseits gegen die Mantelfläche einer zylindrischen Ausnehmung 213,1a im Gehäusering 213.1 mittels einer ersten Kolbendichtung 216 gedichtet. In gleicher Weise ist der innere Kolbenabschnitt 206.1b umfangsseits in einer koaxialen Durchgangsbohrung 213.1b im Gehäusering 213.1 mittels einer zweiten Kolbendichtung 217 gedichtet. Der dritte Druckmittelstrom D3 wird über den dritten Druckmittelanschluss 209 zunächst dem dritten Druckmittelraum 200b zugeführt. Von dort gelangt das Druckmittel über einen zwischen den beiden Dichtungen 218 in axialer Richtung durch den dritten Antriebskolben 206 verlaufenden ersten Druckmittelkanal 206b, um anschließend in einen mit diesem korrespondierenden, im Zusatzkolben 206.1 bis zum vierten Druckmittelraum 200c verlaufenden zweiten Druckmittelkanal 206.1d zu gelangen.

Der Gehäusering 213.1 weist umfangsseits einen radialen Vorsprung 213.1c auf, mit dem er im Verbindungsbereich zwischen dem dritten und dem vierten Gehäuseteil 201, 202 formschlüssig festgelegt ist. Zwischen dem Gehäusering 213.1 und dem dritten Antriebskolben 206 wird ein vorgeschalteter zweiter Druckmittelraum 200a* gebildet, in den der zweite Druckmittelanschluss 208 einmündet. Über letzteren wird der zweite Druckmittelstrom D2 zum Vollzug der Teilhubbewegung T1 für das unabhängig angetriebene Schließglied 3 zu- bzw. abgeführt. Der vorgeschaltete zweite Druckmittelraum 200a* ist mit dem zwischen dem zweiten Antriebskolben 205 einerseits und dem Gehäusering 213.1 in Verbindung mit dem Zusatzkolben 206.1 andererseits gebildeten zweiten Druckmittelraum 200a über wenigstens einen Verbindungskanal 213.1d verbunden, der in einem die zylindrische Ausnehmung 213.1a außenseits umfassenden Teil des Gehäuseringes 213.1 angeordnet ist.

Der radiale Vorsprung 213.1c ist auf seiner dem dritten Antriebskolben 206 zugewandten Seite derart ausgebildet, dass letzterer nach Vollzug des zweiten Teilhubweges b (**Figur 6a**) dort eine Endlagenbegrenzung erfährt. Eine entsprechende Begrenzung des ersten Teilhubweges a (siehe auch **Figur 2**) erfolgt bei der ersten Einzelverstelleinrichtung 200.1 (**Figur 6**) dadurch, dass eine modifizierte Mitnehmerhülse 212* an der nicht dargestellten Anschlagmutter 214 (vergl. **Figur 2**) zur Anlage kommt. Die Mitnahme der modifizierten Mitnehmerhülse 212* wird, wie dies aus der Ausführungsform der Einzelverstelleinrichtungen 200 gemäß den **Figuren 1** bis **5** bereits ersichtlich und wie dies hierzu auch beschrieben ist, durch die zweite Mitnahmefläche 205a am zweiten Antriebskolben 205 im Zusammenwirken mit dem dritten Rezess 212b an der modifizierten Mitnehmerhülse 212* realisiert. Über den zweiten Rezess 212a greift die modifizierte Mitnehmerhülse 212* wiederum an dem nicht dargestellten Kopfteil 203a (vergl. auch **Figur 4**) an, um dadurch das erste Schließglied 3, das unabhängig angetriebene Schließglied, im Verlauf der ersten Teiloffenstellung T1 in die eine oder andere Richtung zu bewegen. Der dritte Antriebskolben 206 greift über seine dritte Mitnahmefläche 206a an einem nicht dargestellten ersten Rezess 204a (vergl. auch **Figur 5**) der ebenfalls nicht dargestellten dritten Antriebsstange 204 an, um dadurch den Vollzug der zweiten Teiloffenstellung T2 des zweiten Schließgliedes 4 in der einen oder anderen Richtung zu bewirken. Die axiale Erstreckung des dem dritten Antriebskolben 206 zugewandten Endes der modifizierten Mitnehmerhülse 212* macht es erforderlich, den Zusatzkolben 206.1 mit einer koaxialen Kolbenbohrung 206.1c zu versehen, die die modifizierte Mitnehmerhülse 212* außenseits mit Spiel umschließt.

### BEZUGSZEICHENLISTE DER VERWENDETEN ABKÜRZUNGEN

- 1: Ventilgehäuse
- 1a: erstes Ventilgehäuseteil
- 1b: zweites Ventilgehäuseteil
- 2: Sitzring
- 2a: erste Sitzfläche
- 2b: zweite Sitzfläche
- 2c: Verbindungsöffnung
- 3: erstes Schließglied
- 3a: erste Verstellstange
- 4: zweites Schließglied
- 4a: zweite Verstellstange
- 5: Leckagehohlraum
- 6: Latemengehäuse
- 7: Steuereinrichtung
- 7a: Stellungsmeldestange
- 7b: erster Druckmittelanschluss
- 8: erste Sitzdichtung (radial, axial)
- 9: zweite Sitzdichtung (radial, axial)
- 10: Dichtung (axial)
- 11: Reinigungsmittelanschluss

- 100: Hauptverstelleinrichtung
- 100a: erster Druckmittelraum
- 101/102: Gehäuse der Hauptverstelleinrichtung
- 101: erstes Gehäuseteil
- 102: zweites Gehäuseteil
- 103: erste Antriebsstange
- 103a: Druckmittelbohrung
- 103b: Querbohrungen
- 103c: erste Anschlagfläche
- 104: erster Antriebskolben
- 105: Hauptfeder

- 200: Einzelverstelleinrichtungen
- 200.1: erste Einzelverstelleinrichtung
- 200.2: zweite Einzelverstelleinrichtung
- 200a: zweiter Druckmittelraum
- 200a*: vorgeschalteter zweiter Druckmittelraum
- 200b: dritter Druckmittelraum
- 200c: vierter Druckmittelraum
- 201/202: Gehäuse der Einzeiverstelleinrichtungen
- 201: drittes Gehäuseteil
- 202: viertes Gehäuseteil
- 203: zweite Antriebsstange
- 203a: Kopfteil
- 203b: zweite Anschlagfläche
- 203c: erste Mitnahmefläche
- 204: dritte Antriebsstange
- 204a: erster Rezess
- 205: zweiter Antriebskolben
- 205a: zweite Mitnahmefläche
- 206: dritter Antriebskolben
- 206a: dritte Mitnahmefläche
- 206b: erster Druckmittelkanal
- 206.1: Zusatzkolben
- 206.1a: äußerer Kolbenabschnitt
- 206.1b: innerer Kolbenabschnitt
- 206.1c: koaxiale Kolbenbohrung
- 206.1d: zweiter Druckmittelkanal
- 206.2: Schraubenverbindung
- 207: zweite Feder
- 208: zweiter Druckmittelanschluss
- 209: dritter Druckmittelanschluss
- 210: vierter Druckmittelanschluss
- 211: Kontermutter
- 212: Mitnehmerhülse
- 212*: modifizierte Mitnehmerhülse
- 212a: zweiter Rezess
- 212b: dritter Rezess
- 212c: dritte Anschlagfläche
- 213: Anschlagring
- 213.1: Gehäusering
- 213.1a: zylindrische Ausnehmung
- 213.1b: koaxiale Durchgangsbohrung
- 213.1c: radialer Vorsprung
- 213.1d: Verbindungskanal
- 214: Anschlagmutter
- 214a: vierte Anschlagfläche
- 214b: Ausnehmung
- 215: Führungsteil
- 215a: Gewindeteil
- 215b: fünfte Anschlagfläche
- 215c: sechste Anschlagfläche
- 216: erste Kolbendichtung
- 217: zweite Kolbendichtung
- 218: Dichtung

- a: erster Teilhubweg
- b: zweiter Teilhubweg
- c: dritter Teilhubweg
- d: vierter Teilhubweg

- D1: erster Druckmittelstrom
- D2: zweiter Druckmittelstrom
- D3: dritter Druckmittelstrom
- Dₐ: äußerer Durchmesser
- Dᵢ: innerer Durchmesser
- H: voller Öffnungshub (volle Offenstellung)
- R: Reinigungsmittel
- R1: erste Sitzreinigungsströmung
- R2: zweite Sitzreinigungsströmung
- T1: erste Teiloffenstellung (T1 = a)
- T2: zweite Teiloffenstellung (T2 = b - c)

## Patentansprüche

1. Vorrichtung zum Antrieb für Doppelsitzventile
• mit zwei unabhängig voneinander bewegbaren, als Sitzteller ausgebildete Schließgliedern (3, 4),
• die zwischen sich einen Leckagehohlraum (5) einschließen,
• der über wenigstens einen Verbindungsweg mit der Umgebung des Doppelsitzventils verbunden ist,
• mit dem unabhängig angetriebenen ersten Schließglied (3),
• das nach einem Teilhub an dem abhängig angetriebenen zweiten Schließglied (4) zur Anlage kommt und dieses bei seiner weiteren Öffnungsbewegung gleichfalls in eine volle Offenstellung (H) überführt,
• mit teleskopartig ineinanderfassenden, auf der Seite des zweiten Schließglieds (4) aus einem Ventilgehäuse (1) nach außen herausgeführten Verstellstangen (3a, 203, 103; 4a, 204),
• über die die Schließglieder (3, 4), zusätzlich zu der vollen Offenstellung (H) und unabhängig voneinander, jeweils in eine Teiloffenstellung (T1, T2) verbringbar sind,
• wobei die volle Offenstellung (H) durch eine Hauptverstelleinrichtung (100) und die Teiloffenstellungen (T1, T2) durch den jeweiligen Schließgliedern (3, 4) zugeordnete Einzelverstelleinrichtungen (200; 200.1, 200.2) erzeugt werden,
• die Einzelverstelleinrichtungen (200; 200.1, 200.2) eigenständig ausgebildet und zwischen der Hauptverstelleinrichtung (100) und dem Ventilgehäuse (1) additiv eingefügt sind
• und auf den Verstellstangen (3a, 203; 4a, 204) jeweils ein Antriebskolben (205, 206 bzw. 206/206.1) gelagert ist, der in einer Richtung auf der zugeordneten Verstellstange axial verschieblich und der in der entgegengesetzten Richtung zum Eingriff in eine Mitnahmeverbindung mit dieser Verstellstange verbringbar ist,
• und wobei die zweite Teiloffenstellung (T2) des zweiten Schließgliedes (4) durch eine im Gehäuse (201/202) der Einzelverstelleinrichtungen (200) vorgesehene feste Anschlagposition des dritten Antriebskolbens (206; 206/206.1) begrenzt ist,
**dadurch gekennzeichnet,**
**dass** eine zur ersten Teiloffenstellung (T1) des ersten Schließgliedes (3) vorgesehene Anschlagposition des zweiten Antriebskolbens (205) relativ zum Gehäuse (201/202) und von deren Außenseite im Bereich zwischen Hauptverstelleinrichtung (100) und Einzelverstelleinrichtungen (200) durch eine Anschlagmutter (214) einstellbar ist.

2. Vorrichtung nach Anspruch 1, **dadurch gekennzeichnet, dass** die Anschlagposition des zweiten Antriebskolbens (205) für die erste Teiloffenstellung (T1) mittelbar über eine Mitnehmerhülse (212; 212*) bestimmt ist, die einerseits im zweiten Antriebskolben (205) und andererseits auf einem Führungsteil (215) gelagert und abgedichtet ist, das als separates Teil von außen in das dritte Gehäuseteil (201) eingreift und dieses komplementär ergänzt, und deren axiale Verschiebung in Richtung der Teiloffenstellung (T1) durch die Anschlagmutter (214) begrenzt ist, die auf dem Führungsteil (215), von außerhalb zugänglich, verstell- und festlegbar angeordnet ist.

3. Vorrichtung nach Anspruch 2, **dadurch gekennzeichnet, dass** die axiale Erstreckung der Mitnehmerhülse (212; 212*) größer als die volle Offenstellung (H) ausgeführt ist.

4. Vorrichtung nach einem der Ansprüche 1 bis 3, **dadurch gekennzeichnet, dass** der dritte Antriebskolben (206) auf seiner dem zweiten Antriebskolben (205) zugewandten Seite mit einem durchmesserkleineren Zusatzkolben (206.1) fest, jedoch lösbar verbunden ist, dass der Zusatzkolben (206.1) im Zusammenwirken mit einem am Gehäuse (201/202) der Einzelverstelleinrichtungen (200) festgelegten Gehäusering (213.1 einen vierten Druckmittelraum (200c) bildet, der mit einem zwischen dem dritten Antriebskolben (206) und dem vierten Gehäuseteil (202) gebildeten dritten Druckmittelraum (200b) verbunden ist, und dass sich bei Zufuhr eines dritten Druckmittelstromes (D3) zum dritten Druckmittelraum (200b) auch zusätzlich im vierten Druckmittelraum (200c) eine auf den Zusatzkolben (206.1) wirkende Zusatzkraft ergibt, die sich einer auf den dritten Antriebskolben (206) wirkenden Kraft additiv überlagert.

5. Vorrichtung nach Anspruch 4, **dadurch gekennzeichnet, dass** der Zusatzkolben (206.1) einen durchmessergrößeren äußeren Kolbenabschnitt (206.1a) und einen durchmesserkleineren inneren Kolbenabschnitt (206.1b) aufweist, dass der innere Kolbenabschnitt (206.1b) stirnseitig gegen den dritten Antriebskolben (206) abgedichtet und mit diesem verschraubt ist, dass der äußere Kolbenabschnitt (206.1a) umfangsseits gegen die Mantelfläche einer zylindrischen Ausnehmung (213.1a) im Gehäusering (213.1) und der innere Kolbenabschnitt (206.1 b) umfangsseits in einer koaxialen Durchgangsbohrung (213.1b) im Gehäusering (213.1) gedichtet sind, und dass im Verbindungsbereich des dritten Antriebskolbens (206) mit dem Zusatzkolben (206.1) in ersterem ein erster Druckmittelkanal (206b) und in letzterem ein zweiter Druckmittelkanal (206.1d) angeordnet sind, die miteinander korrespondieren und die den dritten Druckmittelraum (200b) und den vierten Druckmittelraum (200c) druckmitteldurchlässig miteinander verbinden.

6. Vorrichtung nach Anspruch 4 oder 5, **dadurch gekennzeichnet, dass** der Gehäusering (213.1) umfangsseits einen radialen Vorsprung (213.1c) aufweist, mit dem der Gehäusering (213.1) im Verbindungsbereich zwischen dem dritten und dem vierten Gehäuseteil (201, 202) formschlüssig festgelegt ist.

7. Vorrichtung nach einem der Ansprüche 4 bis 6, **dadurch gekennzeichnet, dass** ein zweiter Druckmittelanschluss (208) für einen zweiten Druckmittelstrom (D2) zur Beaufschlagung des im dritten Gehäuseteil (201) angeordneten zweiten Antriebskolbens (205) in einen vorgeschalteten zweiten Druckmittelraum (200a*) im Bereich zwischen dem dritten Antriebskolben (206) und dem Gehäusering (213.1) einmündet, und dass der vorgeschaltete zweite Druckmittelraum (200a*) mit einem zwischen dem zweiten Antriebskolben (205) einerseits und dem Gehäusering (213.1) in Verbindung mit dem Zusatzkolben (206.1) andererseits gebildeten zweiten Druckmittelraum (200a) über wenigstens einen Verbindungskanal (213.1d) verbunden ist, der in einem die zylindrische Ausnehmung (213.1a) außenseits umfassenden Teil des Gehäuserings (213.1) angeordnet ist.

8. Vorrichtung nach einem der Ansprüche 1 bis 7, **dadurch gekennzeichnet, dass** die Anschlagposition des dritten Antriebskolbens (206; 206/206.1) für die zweite Teiloffenstellung (T2) durch einen am Gehäuse (2011202) fest angeordneten, durch den dritten Antriebskolben (206; 206/206.1) axial anfahrbaren Anschlagring bzw. Gehäusering (213; 213.1) bestimmt ist.

9. Vorrichtung nach einem der Ansprüche 1 bis 8, **dadurch gekennzeichnet, dass** die erste Verstellstange (3a) über ihr Bolzengewinde mit einer zweiten Antriebsstange (203) im Bereich einer zweiten Einzelverstelleinrichtung (200.2) verschraubt ist, dass die zweite Antriebsstange (203) über ihr Bolzengewinde wiederum mit einer ersten Antriebsstange (103) der Hauptverstelleinrichtung (100) im Bereich einer ersten Einzelverstelleinrichtung (200.1) verschraubt ist, und dass die Verschraubung der Antriebsstangen (103, 203) durch eine auf dem Bolzengewinde der zweiten Antriebsstange (203) angeordnete Kontermutter (211) gekontert wird.

10. Vorrichtung nach Anspruch 9, **dadurch gekennzeichnet, dass** die Verschraubung der ersten Verstellstange (3a) mit der zweiten Antriebsstange (203) durch einen im Muttergewinde der zweiten Antriebsstange (203) angeordneten, als Gewindesicherung wirkenden Gewindeeinsatz gegen Lösen gesichert ist.

11. Vorrichtung nach Anspruch 9 oder 10, **dadurch gekennzeichnet, dass** die erste Antriebsstange (103) in ihrer Längsachse mit einer durchgehenden Druckmittelbohrung (103a) versehen ist, die über Querbohrungen (103b) in einen ersten Druckmittelraum (100a) der Hauptverstelleinrichtung (100) ausmündet.

12. Vorrichtung nach einem der Ansprüche 1 bis 11, **dadurch gekennzeichnet, dass** die Gehäuseteile (101, 102) der Hauptverstelleinrichtung (100) und jene (201, 202) der Einzelverstelleinrichtungen (200) aus formgleichen Gehäuserohteifen gefertigt sind.

13. Vorrichtung nach einem der Ansprüche 1 bis 12, **dadurch gekennzeichnet, dass** die Gehäuseteile (101, 102) der Hauptverstelleinrichtung (100) und jene (201, 202) der Einzelverstelleinrichtungen (200) jeweils miteinander stoffschlüssig verbunden sind.

14. Vorrichtung nach einem der Ansprüche 1 bis 13, **dadurch gekennzeichnet, dass** die Antriebskolben (205, 206; 206/206.1) und ein Antriebskolben (104) der Hauptverstelleinrichtung (100) jeweils aus korrosionsbeständigem Leichtmetall bestehen.

15. Vorrichtung nach einem der Ansprüche 1 bis 14, **dadurch gekennzeichnet, dass** die nachfolgende Anordnung, bestehend aus einem Führungsteil (215) in Verbindung mit der Anschlagmutter (214), der Mitnehmerhülse (212), der zweiten Antriebsstange (203) in Verbindung mit der Kontermutter (211), einer dritten Antriebsstange (204) und einer zwischen letzterer und der zweiten Antriebsstange (203) angeordneten zweiten Feder (207), insgesamt aus den montierten Einzelverstelleinrichtungen (200) in Richtung der an letzteren anflanschbaren Hauptverstelleinrichtung (100) ausbaubar ist.

16. Vorrichtung nach einem der Ansprüche 1 bis 15, **dadurch gekennzeichnet, dass** nach Lösen der Verschraubung zwischen der ersten Verstellstange (3a) und der zweiten Antriebsstange (203) die Vorspannung der zweiten Feder (207) abgebaut ist.

## Claims

1. Device for actuating double seat valves
• with two closing elements (3, 4) which are designed as seat discs and move independently to each other,
• which enclose between them a leakage chamber (5),
• which is connected via at least one path of travel with the surroundings of the double seat valve,
• with the independently actuated first closing element (3),
• that after a partial stroke comes to rest on the dependently actuated second closing element (4) and likewise transfers this with its further opening movement into a full open position (H),
• with valve stems (3a, 203, 103; 4a, 204) which fit into one another in a telescoping manner and that extend outward on the side of the second closing element (4) out of a valve housing (1),
• through which the closing elements (3, 4), additionally to the full open position (H) and independent of each other, are each able to be brought in a partially open position (T1, T2),
• whereby the full open position (H) is generated through a main adjustment device (100) and the partially open positions (T1, T2) through the respective closing elements (3, 4) assigned individual adjustment devices (200; 200.1, 200.2),
• the individual adjustment devices (200; 200.1, 200.2) are designed stand-alone and are additively inserted between the main adjustment device (100) and the valve housing (1)
• and one actuating piston (205, 206 or 206/206.1) is respectively installed on a control rod (3a, 203; 4a, 204), which can be brought axially movable in one direction on the assigned control rod and in the opposite direction for engagement in a clamping connection with this control rod,
• and whereby the second partially open position (T2) of the second closing element (4) is limited by a permanent stop position of the third actuating piston (206; 206/206.1) which is provided in the housing (201/202) of the individual adjustment device (200),
**characterized in that**
a stop position of the second actuating piston (205) is relative to the housing (201/202) provided for the first partially open position (T1) of the first closing element (3) and is adjustable from its exterior in the area between the main adjustment device (100) and the individual adjustment devices (200) through a stop nut (214).

2. Device according to Claim 1, **characterized in that** the stop position of the second actuating piston (205) for the first partially open position (T1) is specified indirectly via a drive sleeve (212; 212*), which on the one side is lodged and sealed in the second actuating piston (205) and on the other side on a guide component (215), that as a separate member engages from the outside in the third housing member (201) and complementary supplements it, and whose axial displacement in the direction of the partially open position (T1) is limited by the stop nut (214), which is located on the guide component (215), is accessible from outside and is adjustable and fixable.

3. Device according to Claim 2, **characterized in that**, the axial extension of the drive sleeve (212; 212*) is designed larger than the full open position (H).

4. Device according to one of the Claims 1 to 3, **characterized in that** the third actuating piston (206) on its side facing the second actuating piston (205) is connected tightly with a smaller diameter additional piston (206.1), but is able however to be loosened, that the additional piston (206.1) working together with a housing ring (213.1) fixed on the housing (201/202) of the individual adjustment device (200) forms a fourth pressurizing medium chamber (200c), which is connected with a third pressurizing medium chamber (200b) formed between the third actuating piston (206) and the fourth housing member (202), and that with the introduction of a third pressurizing medium flow (D3) to the third pressurizing medium chamber (200b) also an auxiliary force affecting the additional piston (206.1) results additionally in the fourth pressurizing medium chamber (200c), which additively superimposes on the force affecting the third actuating piston (206).

5. Device according to Claim 4, **characterized in that** the additional piston (206.1) has a larger diameter exterior piston section (206.1a) and a smaller diameter interior piston section (206.1b), that the interior piston section (206.1b) is sealed on its frontal end from the third actuating piston (206) and is screwed with this, that the exterior piston section (206.1a) is sealed on its periphery from the shell of a cylindrical cutout (213.1a) in the housing ring (213.1) and the interior piston section (206.1b) is sealed on its periphery in a coaxial through bore (213.1b) in the housing ring (213.1), and that in the connection area of the third actuating piston (206) with the additional piston (206.1) are located in the former a first pressurizing medium channel (206b) and in the latter a second pressurizing medium channel (206.1d), which correspond with one another and connect the third pressurizing medium chamber (200b) and the fourth pressurizing medium chamber (200c) with one another permeable to the pressurizing medium.

6. Device according to Claim 4 or 5, **characterized in that** the housing ring (213.1) has a radial projection (213.1c) on its circumference, with which the housing ring (213.1) is positively fastened in the connection area between the third and the fourth housing member (201, 202).

7. Device according to one of the Claims 4 to 6, **characterized in that** a second pressurizing medium connection (208) for a second pressurizing medium flow (D2) for pressurizing of the second actuating piston (205) located in the third housing member (201) discharges in a preceding second pressurizing medium chamber (200a*) in the area between the third actuating piston (206) and the housing ring (213.1), and that the preceding second pressurizing medium chamber (200a*) is connected with a second pressurizing medium chamber (200a) formed between the second actuating piston (205) on one side and the housing ring (213.1) in connection with the additional piston (206.1) on the other side through at least one connection channel (213.1d), which is located in a part of the housing ring (213.1) containing the cylindrical cutout (213.1a) on the exterior.

8. Device according to one of the Claims 1 to 7, **characterized in that** the stop position of the third actuating piston (206; 206/206.1) for the second partially open position (T2) is determined by a stop ring or housing ring (213; 213.1), which is permanently located on a housing (201/202) and is axially moveable through the third actuating piston (206; 206/206.1).

9. Device according to one of the Claims 1 to 8, **characterized in that** the first control rod (3a) is screwed with its external threads with a second actuator stem (203) in the area of a second individual adjustment device (200.2), that the second actuator stem (203) is screwed with its external threads likewise with a first actuator stem (103) of the main adjustment device (100) in the area of a first individual adjustment device (200.1), and that the screwed connection of the actuator stems (103, 203) are secured firmly by a lock nut (211) located on the external threads of the second actuator stem (203).

10. Device according to Claim 9, **characterized in that** the screwed connection of the first control rod (3a) with the second actuator stem (203) is secured against loosening by a threaded section, acting as a screw lock, located in the internal threads of the second actuator stem (203).

11. Device according to Claim 9 or 10, **characterized in that** the first actuator stem (103) is provided with a continuous pressurizing medium bore hole (103a) in its longitudinal axis, which leads over cross holes (103b) into a first pressurizing medium chamber (100a) of the main adjustment device (100).

12. Device according to one of the Claims 1 to 11, **characterized in that** the housing members (101, 102) of the main adjustment device (100) and each (201, 202) of the individual adjustment devices (200) are made from housing rough parts of the same shape.

13. Device according to one of the Claims 1 to 12, **characterized in that** the housing member (101, 102) of the main adjustment device (100) and each (201, 202) of the individual adjustment devices (200) are each integrally joined with each other.

14. Device according to one of the Claims 1 to 13, **characterized in that** the actuating pistons (205, 206; 206/206.1) and an actuating piston (104) of the main adjustment device (100) each are made out of corrosion resistant light alloy.

15. Device according to one of the Claims 1 to 14, **characterized in that** the following arrangement, made up of a guide component (215) in connection with the stop nut (214), the drive sleeve (212), the second actuator stem (203) in connection with the lock nut (211), a third actuator stem (204) and a second spring (207) located between the latter and the second actuator stem (203), is totally extendable out of the assembled individual adjustment devices (200) in the direction of the main adjustment device (100) flanged on the latter.

16. Device according to one of the Claims 1 to 15, **characterized in that** after loosening the screw connection between the first control rod (3a) and the second actuator stem (203) the pretensioning of the second spring (207) is relieved.

## Revendications

1. Dispositif d'entraînement pour soupapes à double siège
• avec deux organes de fermeture (3, 4) mobiles indépendamment l'un de l'autre, constitués en tant que disque de siège, ,
• qui enferment entre eux une cavité de fuite (5),
• qui est raccordée, via au moins une voie de raccordement, à l'environnement de la soupape à double siège,
• avec le premier organe de fermeture (3) entraîné de façon indépendante,
• qui, après une course partielle, vient buter contre le deuxième organe de fermeture (4) entraîné de façon dépendante et amène celui-ci également dans une position d'ouverture complète (H) lors de la suite de son mouvement d'ouverture,
• avec des tiges de réglage (3a, 203, 103 ; 4a, 204) qui se contiennent mutuellement les unes dans les autres de façon télescopique, sorties vers l'extérieur sur le côté du deuxième organe de fermeture (4) à partir d'un carter de soupape (1),
• via lesquelles les organes de fermeture (3, 4), en plus de la position d'ouverture complète (H) et indépendamment l'un de l'autre, peuvent être chacun amenés dans une position d'ouverture partielle (T1, T2),
• la position d'ouverture complète (H) étant produite par un équipement de réglage principal (100) et les positions d'ouverture partielle (T1, T2) étant produites par des équipements de réglage individuels (200 ; 200.1, 200.2) affectés aux organes de fermeture (3, 4) respectifs,
• les équipements de réglage individuels (200 ; 200.1, 200.2) étant constitués de façon autonome et étant insérés de façon additive entre l'équipement de réglage principal (100) et le carter de soupape (1)
• un piston d'entraînement (205, 206 ou 206/206.1) étant mis sur palier respectivement sur les tiges de réglage (3a, 203 ; 4a, 204) et pouvant, dans une direction, être déplacé dans le sens axial sur la tige de réglage affectée et, dans la direction opposée, pouvant être amené en prise dans une liaison d'entraînement avec cette tige de réglage,
• et la deuxième position d'ouverture partielle (T2) du deuxième organe de fermeture (4) étant limitée par une position de butée fixe du troisième piston d'entraînement (206 ; 206/206.1) prévue dans le carter (201/202) des équipements de réglage individuels (200),
**caractérisé en ce que**
il est possible de régler par un écrou de butée (214) une position de butée du deuxième piston d'entraînement (205) prévue pour la première position d'ouverture partielle (T1) du premier organe de fermeture (3) par rapport au carter (201/202) et de son côté extérieur dans la zone entre l'équipement de réglage principal (100) et les équipements de réglage individuels (200).

2. Dispositif selon la revendication 1, **caractérisé en ce que** la position de butée du deuxième piston d'entraînement (205) est définie pour la première position d'ouverture partielle (T1) de façon indirecte via une douille d'entraîneur (212 ; 212*) qui repose, et est rendue étanche, d'une part dans le deuxième piston d'entraînement (205) et d'autre part sur une pièce de guidage (215) qui engrène en tant que pièce séparée depuis l'extérieur dans la troisième partie de carter (201) et la complète de façon complémentaire, et dont le déplacement axial en direction de la première position d'ouverture partielle (T1) est limité par l'écrou de butée (214) qui est disposé sur la pièce de guidage (215) de façon à être accessible, réglable et blocable depuis l'extérieur.

3. Dispositif selon la revendication 2, **caractérisé en ce que** l'étendue axiale de la douille d'entraîneur (212 ; 212*) est réalisée plus grande que la position d'ouverture complète (H).

4. Dispositif selon une des revendications 1 à 3,
**caractérisé en ce que** le troisième piston d'entraînement (206), sur son côté tourné vers le deuxième piston d'entraînement (205), est raccordé de façon fixe mais cependant détachable à un piston supplémentaire (206.1) de diamètre plus petit, **en ce que** le piston supplémentaire (206.1), en coopération avec un carter annulaire (213.1), fixé sur le carter (201/202) des équipements de réglage individuels (200), forme une quatrième chambre de moyen de pression (200c) qui est raccordée à une troisième chambre de moyen de pression (200b) formée entre le troisième piston d'entraînement (206) et la quatrième pièce de carter (202), et **en ce que**, lors de l'amenée d'un troisième courant de moyen de pression (D3) vers la troisième chambre de moyen de pression (200b), il résulte également à titre supplémentaire dans la quatrième chambre de moyen de pression (200c) une force supplémentaire, agissant sur le piston supplémentaire (206.1), qui se superpose de façon additive à une force agissant sur le troisième piston d'entraînement (206).

5. Dispositif selon la revendication 4, **caractérisé en ce que** le piston supplémentaire (206.1) présente un tronçon de piston extérieur (206.1a) de diamètre plus grand et un tronçon de piston intérieur (206.1b) de diamètre plus petit, **en ce que** le tronçon de piston intérieur (206.1b) est, sur la face avant, rendu étanche vis-à-vis du troisième piston d'entraînement (206) et est assemblé à celui-ci par vissage, **en ce que** le tronçon de piston extérieur (206.1a) est rendu étanche, sur sa périphérie, vis-à-vis de la surface d'enveloppe d'un creux cylindrique (213.1a) dans le carter annulaire (213.1), et **en ce que** le tronçon de piston intérieur (206.1b) est rendu étanche sur sa périphérie dans un alésage débouchant coaxial (213.1b) dans le carter annulaire (213.1), et **en ce que**, dans la zone de raccordement du troisième piston d'entraînement (206) avec le piston supplémentaire (206.1), un premier canal de moyen de pression (206b) est disposé dans le premier cité, et un deuxième canal de moyen de pression (206.1d) est disposé dans le dernier cité, qui correspondent entre eux et qui raccordent entre elles la troisième chambre de moyen de pression (200b) et la quatrième chambre de moyen de pression (200c) de façon à laisser passer le moyen de pression.

6. Dispositif selon la revendication 4 ou 5, **caractérisé en ce que** le carter annulaire (213.1) présente sur sa périphérie une saillie radiale (213.1c) avec laquelle le carter annulaire (213.1) est fixé par liaison mécanique dans la zone de raccordement entre la troisième et la quatrième pièce de carter (201, 202).

7. Dispositif selon une des revendications 4 à 6, **caractérisé en ce qu'**un deuxième raccord de moyen de pression (208) pour un deuxième flux de moyen de pression (D2) destiné à alimenter le deuxième piston d'entraînement (205) disposé dans la troisième pièce de carter (201) débouche dans une deuxième chambre de moyen de pression (200a*), installée en amont, dans la zone entre le troisième piston d'entraînement 206 et le carter annulaire (213.1), et **en ce que** la deuxième chambre de moyen de pression (200a*), installée en amont, est raccordée à une deuxième chambre de moyen de pression (200a) formée entre le deuxième piston d'entraînement (205) d'une part et le carter annulaire (213.1) en liaison avec le piston supplémentaire (206.1) d'autre part, via au moins un canal de raccordement (213.1d) qui est disposé dans une partie du carter annulaire (213.1) englobant sur le côté extérieur le creux cylindrique (213.1a).

8. Dispositif selon une des revendications 1 à 7, **caractérisé en ce que** la position de butée du troisième piston d'entraînement (206 ; 206/206.1) pour la deuxième position d'ouverture partielle (T2) est définie par une bague de butée ou un carter annulaire (213 ; 213.1) disposé(e) de façon fixe sur le carter (201/202) et pouvant être déplacé(e) axialement par le troisième piston d'entraînement (206 ; 206/206.1).

9. Dispositif selon une des revendications 1 à 8, **caractérisé en ce que** la première tige de réglage (3a) est vissée via son filet extérieur avec une deuxième tige d'entraînement (203) dans la zone d'un deuxième équipement de réglage individuel (200.2), **en ce que** la deuxième tige d'entraînement (203) est vissée, sur son filet extérieur, à son tour avec une première tige d'entraînement (103) de l'équipement de réglage principal (100) dans la zone d'un premier équipement de réglage individuel (200.1), et **en ce que** le vissage des tiges d'entraînement (103, 203) est bloqué par un contre-écrou (211) disposé sur le filet extérieur de la deuxième tige d'entraînement (203).

10. Dispositif selon la revendication 9, **caractérisé en ce que** le vissage de la première tige de réglage (3a) avec la deuxième tige d'entraînement (203) est bloqué contre le desserrage par un insert fileté agissant en tant qu'arrêt fileté, disposé dans le filet femelle de la deuxième tige d'entraînement (203).

11. Dispositif selon la revendication 9 ou 10, **caractérisé en ce que** la première tige d'entraînement (103) est, dans son axe longitudinal, munie d'un alésage débouchant de moyen de pression (103a) qui débouche, via des alésages transversaux (103b), dans une première chambre de moyen de pression (100a) de l'équipement de réglage principal (100).

12. Dispositif selon une des revendications 1 à 11, **caractérisé en ce que** les pièces de carter (101, 102) de l'équipement de réglage principal (100) et celles (201, 202) des équipements de réglage individuels (200) sont fabriquées à partir d'ébauches de carter de formes identiques.

13. Dispositif selon une des revendications 1 à 12, **caractérisé en ce que** les pièces de carter (101, 102) de l'équipement de réglage principal (100) et celles (201, 202) des équipements de réglage individuels (200) sont raccordées respectivement entre elles par soudage ou encollage.

14. Dispositif selon une des revendications 1 à 13, **caractérisé en ce que** les pistons d'entraînement (205, 206 ; 206/206.1) et un piston d'entraînement (104) de l'équipement de réglage principal (100) sont respectivement constitués de métal léger résistant à la corrosion.

15. Dispositif selon une des revendications 1 à 14, **caractérisé en ce que** le dispositif suivant, comprenant une pièce de guidage (215) en liaison avec l'écrou de butée (214), la douille d'entraîneur (212), la deuxième tige d'entraînement (203) en liaison avec le contre-écrou (211), une troisième tige d'entraînement (204) et un deuxième ressort (207) disposé entre cette dernière et la deuxième tige d'entraînement (203), est extensible au total à partir des équipements de réglage individuels (200) montés en direction de l'équipement de réglage principal (100) qui peut être bridé sur les équipements de réglage individuels (200).

16. Dispositif selon une des revendications 1 à 15, **caractérisé en ce que**, après le desserrage de l'assemblage vissé entre la première tige de réglage (3a) et la deuxième tige d'entraînement (203), la prétension du deuxième ressort (207) est supprimée.
